(19) Europäisches Patentamt / European Patent Office / Office européen des brevets

(11) EP 4 366 133 A1

(12) EUROPEAN PATENT APPLICATION
published in accordance with Art. 153(4) EPC

(43) Date of publication:
08.05.2024 Bulletin 2024/19

(21) Application number: 22832737.5

(22) Date of filing: 07.06.2022

(51) International Patent Classification (IPC):
H02J 50/60 (2016.01)       H02J 7/00 (2006.01)
H02J 50/12 (2016.01)       H02J 50/80 (2016.01)

(52) Cooperative Patent Classification (CPC):
H02J 7/00; H02J 50/12; H02J 50/60; H02J 50/80

(86) International application number:
PCT/JP2022/022912

(87) International publication number:
WO 2023/276580 (05.01.2023 Gazette 2023/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.06.2021 JP 2021107321

(71) Applicant: CANON KABUSHIKI KAISHA
Tokyo 146-8501 (JP)

(72) Inventor: IWASE, Hajime
Tokyo 146-8501 (JP)

(74) Representative: Canon Europe Limited
European Intellectual Property Group
4 Roundwood Avenue
Stockley Park
Uxbridge UB11 1AF (GB)

(54) **POWER TRANSMITTING DEVICE, POWER RECEIVING DEVICE, WIRELESS POWER TRANSMISSION METHOD, AND PROGRAM**

(57) A power transmission apparatus 100 includes a power transmission unit 303 that wirelessly transmits power to a power reception apparatus using a power transmission coil 304, a communication unit 305 that performs communication for determining a power transmission limitation period with the power reception apparatus, and a control unit 301 that performs a detection process for detecting a foreign object based on a measurement result of measuring at least either of a voltage and a current of an antenna at at least two or more times during the power transmission limitation period when the power to be transmitted to the power reception apparatus is limited, and according to a state of at least either of the power transmission apparatus and the power reception apparatus after a length of the power transmission limitation period is determined, performs control so that a predetermined signal for changing the determined length of the power transmission limitation period is transmitted to the power reception apparatus.

FIG.5A

## Description

Technical Field

The present disclosure relates to a wireless power transmission technique.

Background Art

In recent years, a technique for a wireless power transmission system is widely developed. Patent literature 1 discusses a method for detecting an object different from a power transmission apparatus and a power reception apparatus that transmit and receive power (foreign object detection) in the Wireless Power Consortium (WPC) standard. Patent literature 2 discusses a method for stopping the transmission of power and then detecting an object based on the amount of attenuation of the voltage value of a power transmission apparatus during the period when the voltage of the power transmission apparatus gradually decreases.

Citation List

Patent Literature

   PTL 1: Japanese Patent Application Laid-Open No. 2017-70074
   PTL 1: Japanese Unexamined Patent Application Publication No. 2018-512036

Summary of Invention

Technical Problem

In a case where an object is detected using the method discussed in patent literature 2, it is assumed that the stop time when the transmission of power is stopped is set in advance between a power reception apparatus and the power transmission apparatus. However, for example, there can be a case where a process for detecting an object cannot be appropriately performed in the stop time set in advance due to a change in a state related to the transmission and reception of power, such as the temperature of the power transmission apparatus or the power reception apparatus or the transmission power. Patent literature 1 and 2 does not consider this issue.

In view of the above issue, the present disclosure is directed to enabling a process for detecting an object to be appropriately performed according to a state related to the transmission and reception of power.

Solution to Problem

According to an aspect of the present disclosure, a power transmission apparatus includes a power transmission unit configured to wirelessly transmit power to a power reception apparatus using an antenna, a detection unit configured to, based on a measurement result of measuring at least either of a voltage and a current of the antenna at at least two or more times during a power transmission limitation period when the power to be transmitted from the power transmission unit to the power reception apparatus is limited, perform a detection process for detecting an object different from the power reception apparatus, a communication unit configured to perform communication for determining the power transmission limitation period with the power reception apparatus, and a control unit configured to, according to a state of at least either of the power transmission apparatus and the power reception apparatus after a length of the power transmission limitation period is determined, perform control so that the communication unit transmits a predetermined signal for changing the determined length of the power transmission limitation period to the power reception apparatus.

Advantageous Effects of Invention

According to the present disclosure, it is possible to appropriately perform a process for detecting an object according to a state related to the transmission and reception of power.

Brief Description of Drawings

   [Fig. 1] Fig. 1 is a diagram illustrating an example of a configuration of a wireless power transmission system.
   [Fig. 2] Fig. 2 is a diagram illustrating an example of a configuration of a power reception apparatus.
   [Fig. 3] Fig. 3 is a diagram illustrating an example of a configuration of a power transmission apparatus.
   [Fig. 4] Fig. 4 is a diagram illustrating an example of a functional configuration of a control unit of a power transmission apparatus.
   [Fig. 5A] Fig. 5A is a diagram illustrating an example of a flow of processing executed by a power transmission apparatus and a power reception apparatus according to a first exemplary embodiment.
   [Fig. 5B] Fig. 5B is a diagram illustrating an example of a flow of processing executed by a power transmission apparatus and a power reception apparatus according to the first exemplary embodiment.
   [Fig. 6] Fig. 6 is a flowchart illustrating an example of processing performed by a power transmission apparatus.
   [Fig. 7A] Fig. 7A is a diagram illustrating an example of a flow of processing executed by a power transmission apparatus and a power reception apparatus according to a second exemplary embodiment.

[Fig. 7B] Fig. 7B is a diagram illustrating an example of a flow of processing executed by a power transmission apparatus and a power reception apparatus according to the second exemplary embodiment.

[Fig. 8] Fig. 8 is a flowchart illustrating an example of processing performed by a power reception apparatus.

[Fig. 9] Fig. 9 is a flowchart illustrating a quality (Q) factor measurement method in a time domain.

[Fig. 10] Fig. 10 is a flowchart illustrating an example of a flow of a third foreign object detection process performed by a power transmission apparatus.

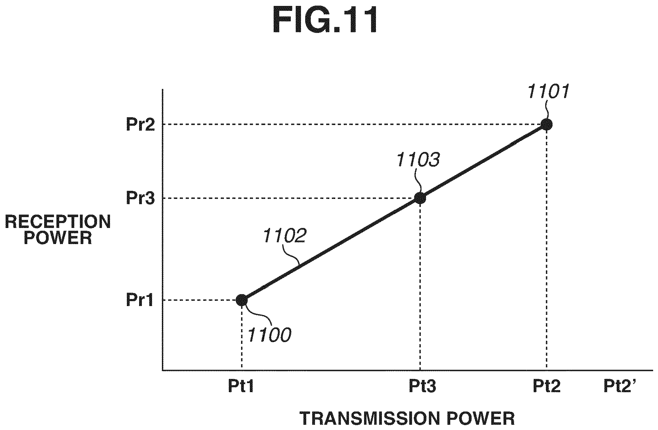

[Fig. 11] Fig. 11 is a diagram illustrating foreign object detection based on a power loss technique.

[Fig. 12A] Fig. 12A is a diagram illustrating a Q factor measurement in a time domain.

[Fig. 12B] Fig. 12B is a diagram illustrating a Q factor measurement in a time domain.

[Fig. 13] Fig. 13 is a diagram illustrating a control process based on a Wireless Power Consortium (WPC) standard.

Description of Embodiments

Exemplary embodiments of the present disclosure will be described below with reference to the drawings. Components described in the following exemplary embodiments illustrate examples of the exemplary embodiments, and do not limit the present disclosure to them only.

(First Exemplary Embodiment)

<System Configuration>

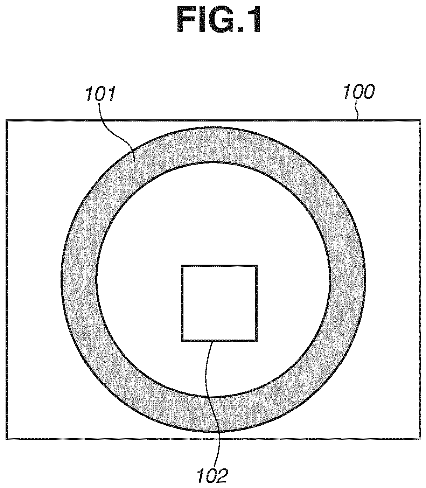

Fig. 1 illustrates an example of the configuration of a wireless power transmission system (a wireless charging system) according to the present exemplary embodiment. As an example, this system includes a power reception apparatus 102 and a power transmission apparatus 100. The detailed configurations of the power reception apparatus 102 and the power transmission apparatus 100 will be described below.

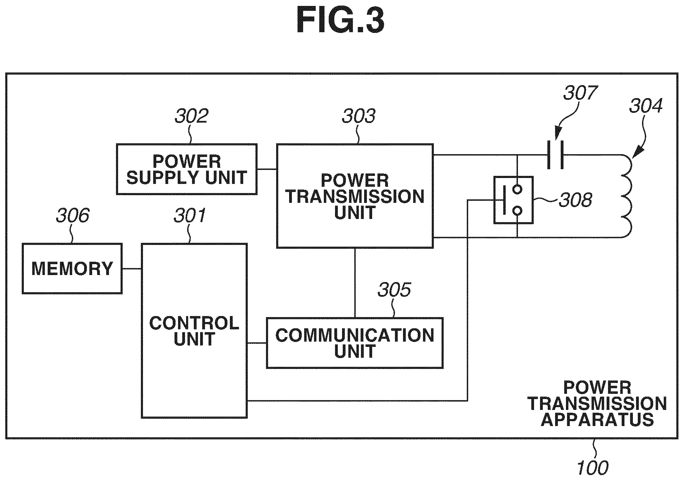

The power transmission apparatus 100 is an electronic device that wirelessly transmits power to the power reception apparatus 102 placed on the power transmission apparatus 100. If the power reception apparatus 102 is placed, the power transmission apparatus 100 wirelessly transmits power to the power reception apparatus 102 via a power transmission coil 101 (corresponding to a power transmission coil 304 in Fig. 3 described below). In the following description, "the power reception apparatus 102 is placed on the power transmission apparatus 100" means "the state where the power reception apparatus 102 is included in the power transmittable range of the power transmission apparatus 100". "The power transmittable range of the power transmission apparatus 100" refers to the range where the power transmission apparatus 100 can transmit power to the power reception apparatus 102 using the power transmission coil 101. In the state where the power reception apparatus 102 is placed on the power transmission apparatus 100, the power reception apparatus 102 and the power transmission apparatus 100 may not need to be in contact with each other. For example, the state where the power reception apparatus 102 is included in the power transmittable range in the state where the power reception apparatus 102 is not in contact with the power transmission apparatus 100 is also regarded as the state where "the power reception apparatus 102 is placed on the power transmission apparatus 100". A configuration may be employed in which the power reception apparatus 102 is not placed on the power transmission apparatus 100, but placed on, for example, a side surface of the power transmission apparatus 100.

Each of the power reception apparatus 102 and the power transmission apparatus 100 can have the function of executing an application other than a wireless charging application. An example of the power reception apparatus 102 is an information processing terminal such as a smartphone. An example of the power transmission apparatus 100 is an accessory device for charging the information processing terminal. For example, the information terminal device includes a display unit (a display) to which power received from a power reception coil (an antenna) is supplied and which displays information to a user. The power received from the power reception coil is stored in a power storage unit (a battery), and the battery supplies the power to the display unit. In this case, the power reception apparatus 102 may include a communication unit that communicates with another apparatus different from the power transmission apparatus 100. The communication unit may be compatible with a communication standard of near-field communication (NFC) communication, the fifth generation mobile communication system (5G), or the like. In this case, the communication unit may perform communication by the battery supplying the power to the communication unit. Alternatively, the power reception apparatus 102 may be a tablet terminal or a storage device such as a hard disk device or a memory device, or may be an information processing apparatus such as a personal computer (PC). Yet alternatively, for example, the power reception apparatus 102 may be an imaging apparatus (a camera or a video camera). Yet alternatively, the power reception apparatus 102 may be an image input apparatus such as a scanner, or may be an image output apparatus such as a printer, a copying machine, or a projector. Yet alternatively, the power reception apparatus 102 may be a robot or a medical device. The power transmission apparatus 100 can be an apparatus for charging the above devices.

Yet alternatively, the power transmission apparatus 100 may be a smartphone. In this case, the power reception apparatus 102 may be another smartphone, or may be wireless earphones.

Yet alternatively, the power reception apparatus 102 according to the present exemplary embodiment may be a vehicle such as an automobile. For example, the automobile as the power reception apparatus 102 may receive power from a charger (the power transmission apparatus 100) via a power transmission antenna installed in a parking lot. Alternatively, the automobile as the power reception apparatus 102 may receive power from a charger (the power transmission apparatus 100) via a power transmission coil (an antenna) embedded in a road. Power received by such an automobile is supplied to a battery. The power in the battery may be supplied to a motor unit (a motor or an electric-powered unit) that drives wheels, or may be used to drive a sensor used in driving assistance or drive a communication unit that communicates with an external apparatus. That is, in this case, the power reception apparatus 102 may include the wheels, the battery, the motor or the sensor driven using received power, and further, a communication unit that communicates with an apparatus other than the power transmission apparatus 100. Further, the power reception apparatus 102 may include an accommodation unit that accommodates a person. Examples of the sensor include a sensor used to measure the distance between vehicles or the distance from another obstacle. For example, the communication unit may be compatible with the Global Positioning System (Global Positioning Satellite, GPS). The communication unit may also be compatible with a communication standard such as the fifth generation mobile communication system (5G). Alternatively, the vehicle may be a bicycle or an automatic motorcycle. Alternatively, the power reception apparatus 102 is not limited to a vehicle, and may be a moving object or a flying object including a motor unit driven using power stored in a battery.

Yet alternatively, the power reception apparatus 102 according to the present exemplary embodiment may be a power tool or a household electrical appliance product. Each of these devices as the power reception apparatus 102 may include a battery and a motor driven by reception power stored in the battery. Each of these devices may also include a notification unit that gives a notification of the remaining amount of the battery. Each of these devices may also include a communication unit that communicates with another apparatus different from the power transmission apparatus 100. The communication unit may be compatible with a communication standard of NFC, the fifth generation mobile communication system (5G), or the like.

The power transmission apparatus 100 according to the present exemplary embodiment may be an in-vehicle charger that transmits power to a mobile information terminal device, such as a smartphone or a tablet compatible with wireless power transmission, inside an automobile. Such an in-vehicle charger may be provided anywhere in the automobile. For example, the in-vehicle charger may be installed in the console of the automobile, or may be installed in the instrument panel (the instrument panel or the dashboard), at a position between seats for passengers, on the ceiling, or on a door. The in-vehicle charger, however, should not be installed at a location where the in-vehicle charger interferes with driving. Although an example has been described where the power transmission apparatus 100 is an in-vehicle charger, such a charger is not limited to a charger placed in a vehicle, and may be installed in transport means such as a train, an aircraft, or a vessel. The charger in this case may also be installed at a position between seats for passengers, on the ceiling, or on a door.

Alternatively, a vehicle such as an automobile including an in-vehicle charger may be the power transmission apparatus 100. In this case, the power transmission apparatus 100 includes wheels and a battery and supplies power to the power reception apparatus 102 via a power transmission circuit unit and a power transmission coil (an antenna) using power in the battery.

The power reception apparatus 102 and the power transmission apparatus 100 according to the present exemplary embodiment perform processing based on the Wireless Power Consortium (WPC) standard.

<Configurations of Apparatuses>

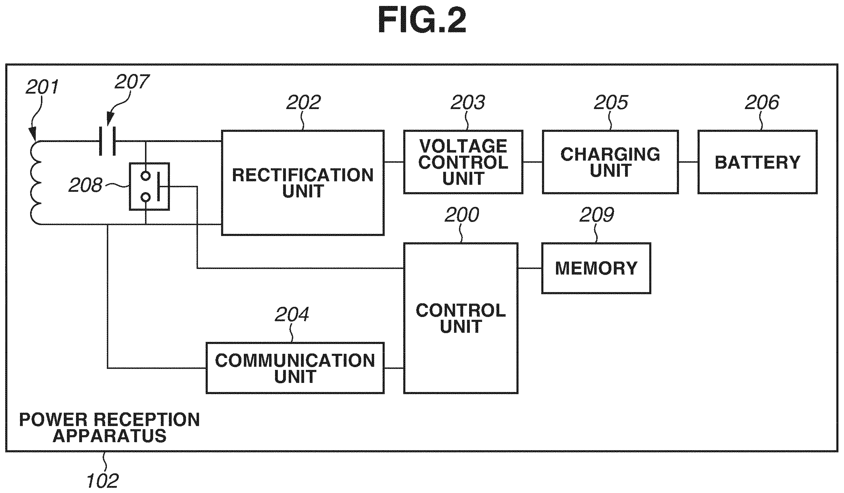

Fig. 2 is a block diagram illustrating an example of the configuration of the power reception apparatus 102. The power reception apparatus 102 includes a control unit 200, a power reception coil 201, a fresh stream unit 202, a voltage suppression unit 203, a communication unit 204, a charging unit 205, a battery 206, a resonance capacitor 207, and a switch 208.

The control unit 200 controls the entirety of the power reception apparatus 102. The control unit 200 is composed of, for example, one or more central processing units (CPUs). The power reception coil 201 is an antenna (a coil) for receiving power and receives power from the power transmission apparatus 100.

The rectification unit 202 converts an alternating-current voltage and an alternating current of the power received via the power reception coil 201 into a direct-current voltage and a direct current, respectively. The voltage control unit 203 converts the level of the direct-current voltage input from the rectification unit 202 into the level of a direct-current voltage at which the control unit 200 and the charging unit 205 operate. The voltage control unit 203 also supplies the voltage at the converted level to the charging unit 205.

The charging unit 205 charges the battery 206. The communication unit 204 performs control communication for wireless charging based on the WPC standard with a communication unit 305 of the power transmission apparatus 100. This control communication is achieved by performing load modulation on the alternating-current voltage and the alternating current with which the power is received by the power reception coil 201.

The power reception coil 201 is connected to the resonance capacitor 207 and resonates at a particular frequency F2. The switch 208 is a switch for short-circuiting the power reception coil 201 and the resonance capacitor 207 and is controlled by the control unit 200. If the switch 208 is turned on, the power reception coil 201 and the resonance capacitor 207 form a series resonance circuit. At this time, a current flows through only the closed circuit of the power reception coil 201, the resonance capacitor 207, and the switch 208, and a current does not flow through the rectification unit 202 and the voltage control unit 203. If the switch 208 is turned off, a current flows through the rectification unit 202 and the voltage control unit 203 via the power reception coil 201 and the resonance capacitor 207. The memory 209 stores a control program executed by the control unit 200, various settings, and information.

Fig. 3 is a block diagram illustrating an example of the configuration of the power transmission apparatus 100. The power transmission apparatus 100 includes a control unit 301, a power supply unit 302, a power transmission unit 303, a power transmission coil 304, a communication unit 305, a memory 306, a resonance capacitor 307, and a switch 308.

The control unit 301 controls the entirety of the power transmission apparatus 100. The control unit 301 is composed of, for example, one or more CPUs. The power supply unit 302 supplies power to the functional blocks. For example, the power supply unit 302 is a commercial power supply or a battery. If the power supply unit 302 is a battery, power supplied from the commercial power supply can be stored in the battery.

The power transmission unit 303 converts direct-current power or alternating-current power input from the power supply unit 302 into alternating-current power in a frequency range for use in wireless power transmission and inputs the alternating-current power to the power transmission coil 304, thereby generating an electromagnetic wave with which to cause the power reception apparatus 102 to receive power. For example, the power transmission unit 303 causes a switching circuit having a half-bridge or full-bridge configuration using a field effect transister (FET) to convert a direct-current voltage supplied from the power supply unit 302 into an alternating-current voltage. In this case, the power transmission unit 303 includes a gate driver that controls the turning on and off of the FET.

The power transmission unit 303 also adjusts a voltage (a power transmission voltage), a current (a power transmission current) to be input to the power transmission coil 304, or both the voltage and the current, or a frequency, thereby controlling the intensity of the electromagnetic wave to be output. If the power transmission voltage or the power transmission current is increased, the intensity of the electromagnetic wave strengthens. If the power transmission voltage or the power transmission current is decreased, the intensity of the electromagnetic wave weakens. Based on an instruction from the control unit 301, the power transmission unit 303 also controls the power transmission unit 303 to control the output of the alternating-current power to start or stop the power transmission coil 304. The power transmission unit 303 according to the present exemplary embodiment has the capability to supply power for outputting a power of at least 15 watts (W) to the charging unit 205 of the power reception apparatus 102.

The communication unit 305 performs communication for power transmission control based on the WPC standard with the power reception apparatus 102 via the power transmission coil 304. The communication unit 305 performs frequency modulation (frequency shift keying (FSK)) on an alternating-current voltage and an alternating current output from the power transmission unit 303 and transmits information to the power reception apparatus 102. The communication unit 305 also demodulates an alternating-current voltage and an alternating current modulated by the communication unit 204 of the power reception apparatus 102, thereby acquiring information transmitted from the power reception apparatus 102. That is, the communication performed by the communication unit 305 is performed by superimposing a signal on an electromagnetic wave transmitted with power from the power transmission unit 303.

The communication unit 305 may be configured to communicate with the power reception apparatus 102 by using a coil or an antenna different from the power transmission coil 304 by a communication method based on a standard different from the WPC standard. The communication unit 305 may also be configured to communicate with the power reception apparatus 102 by selectively using a plurality of types of communication.

The memory 306 stores a control program executed by the control unit 301, and can also store the states of the power transmission apparatus 100 and the power reception apparatus 102. For example, the state of the power transmission apparatus 100 can be acquired by the control unit 301, and the state of the power reception apparatus 102 can be acquired from the control unit 200 of the power reception apparatus 102 and received via the communication unit 305.

The power transmission coil 304 is an antenna (a coil) for transmitting power to the power reception apparatus 102, is connected to the resonance capacitor 307, and resonates at a particular frequency F1. The switch 308 is a switch for short-circuiting the power transmission coil 304 and the resonance capacitor 307 and is controlled by the control unit 301. If the switch 308 is turned on, the power transmission coil 304 and the resonance capacitor 307 form a series resonance circuit. At this time, a current flows through only the closed circuit of the power transmission coil 304, the resonance capacitor 307, and the switch 308. If the switch 208 is turned off, power is supplied to the power transmission coil 304 and the resonance capacitor 307 from the power transmission unit 303.

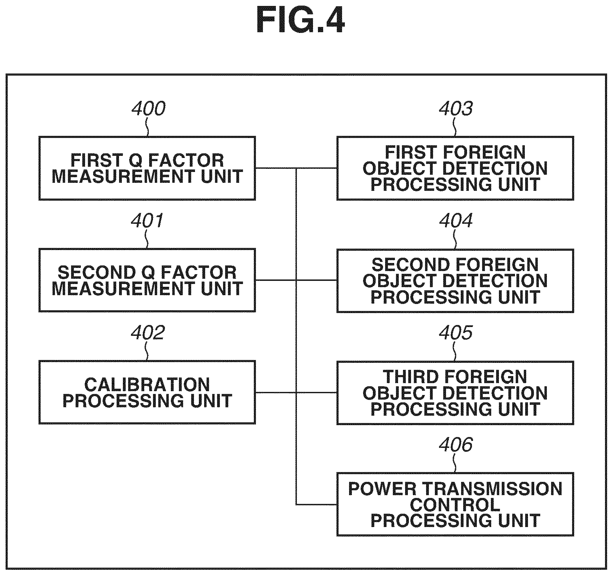

Fig. 4 is a block diagram illustrating the functional configuration of the control unit 301 of the power transmission apparatus 100 according to the present exemplary embodiment. The control unit 301 includes a first quality (Q) factor measurement unit 400, a second Q factor measurement unit 401, a calibration processing unit 402, a first foreign object detection processing unit 403, a second foreign object detection processing unit 404, a third foreign object detection processing unit 405, and a power transmission control processing unit 406. A "foreign object" according to the present exemplary embodiment refers to an object different from the power transmission apparatus 100 and the power reception apparatus 102. For example, the foreign object can be a metal piece such as a clip, an NFC tag, or an integrated circuit (IC) card. Among objects in portions essential for the power reception apparatus and a product in which the power reception apparatus is incorporated or the power transmission apparatus and a product in which the power transmission apparatus is incorporated, an object that may generate unintended heat when the object is exposed to wireless power transmitted from the power transmission antenna does not correspond to the foreign object. The power transmission apparatus 100 according to the present exemplary embodiment performs the process of determining whether the foreign object is present in the power transmittable range of the power transmission apparatus 100. In the following description, this process will also be referred to as "foreign object detection" or a "foreign object detection process".

The first Q factor measurement unit 400 measures a Q factor in a frequency domain (a first Q factor measurement). The second Q factor measurement unit 401 measures a Q factor in a time domain (a second Q factor measurement). The calibration processing unit 402 acquires a calibration data point and performs a creation process for creating a calibration curve. The first foreign object detection processing unit 403 performs a foreign object detection process based on a first Q factor measured by the first Q factor measurement unit 400 (a first foreign object detection process). The second foreign object detection processing unit 404 performs a foreign object detection process based on a power loss technique (a second foreign object detection process). The third foreign object detection processing unit 405 performs a foreign object detection process based on a second Q factor measured by the second Q factor measurement unit 401 (a third foreign object detection process). The power transmission control unit 406 performs processing regarding the start of the transmission of power, the stop of the transmission of power, an increase or decrease in the transmission power of the power transmission unit 303. The processing units illustrated in Fig. 4 are configured as independent programs, and can operate in parallel while synchronizing the programs by event processing. The details of processing performed by the blocks in Fig. 4 will be described below.

<Control Based on WPC Standard>

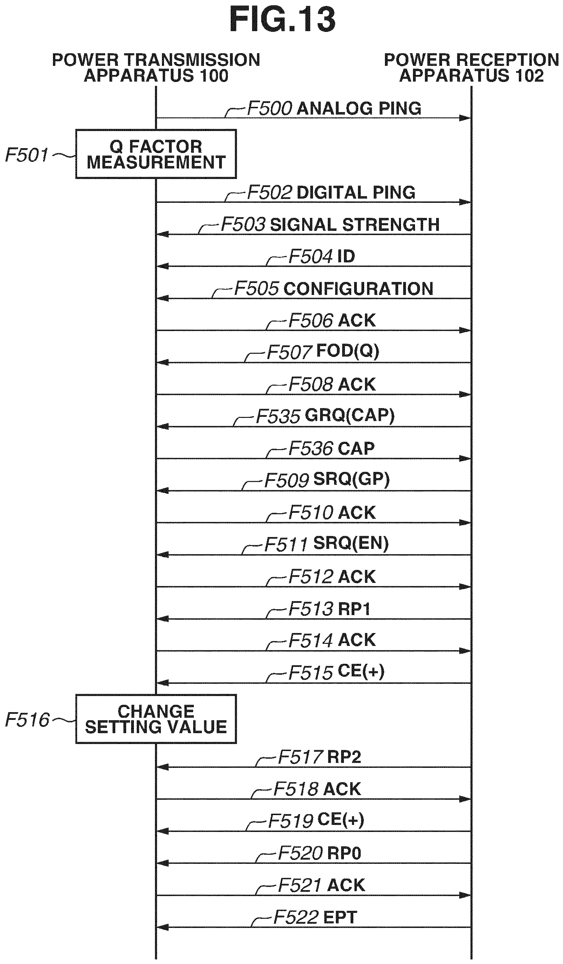

The flow of control of the power transmission apparatus 100 and the power reception apparatus 102 according to the present exemplary embodiment is described. First, control of wireless power transmission compliant with the WPC standard is described. Fig. 13 is a sequence diagram illustrating the flow of control of the power transmission apparatus and the power reception apparatus compliant with the WPC standard v1.2.3. The sequence illustrated in Fig. 13 corresponds to control executed by the power transmission apparatus having a configuration that meets the WPC standard. Although a description is given below of a case where the power transmission apparatus and the power reception apparatus are compliant with the WPC standard v1.2.3, the present disclosure is not limited to this. That is, the power transmission apparatus and the power reception apparatus according to the present disclosure may be compliant with the WPC standard v1.2.3 or a version of the WPC standard later than the WPC standard v1.2.3, or may be compliant with a version earlier than the WPC standard v1.2.3.

The WPC standard defines a plurality of phases including the power transfer phase where the transmission of power for charging is executed, and phases before the transmission of power for charging is performed. The phases before power is transmitted include (1) the selection phase, (2) the ping phase, (3) the identification & configuration phase, (4) the negotiation phase, and (5) the calibration phase. Hereinafter, the identification and configuration phase will be referred to as the "I & C phase".

In the selection phase, the power transmission apparatus 100 transmits power with an analog ping (hereinafter referred to as an "A-Ping") to detect an object present near the power transmission coil 304 (step F500). The A-Ping is pulsed power and is power for detecting an object. Even if the power reception apparatus receives the power with the A-Ping, the received power is too small to start the control unit 301 of the power reception apparatus 102. The power transmission apparatus 100 intermittently transmits the power with the A-Ping. The voltage or the current applied to the power transmission coil 209 changes between a case where an object is placed in the power transmittable range of the power transmission apparatus 100 and a case where an object is not placed in the power transmittable range of the power transmission apparatus 100. Accordingly, the control unit 301 of the power transmission apparatus 100 detects at least either one of the voltage value and the current value of the power transmission coil 304 when the A-Ping is transmitted. If the voltage value falls below a certain threshold, or if the current value exceeds a certain threshold, the control unit 201 determines that an object is present. Then, a transition is made to the ping phase.

In the ping phase, if it is detected that an object is placed based on the A-Ping, the first Q factor measurement unit 400 of the power transmission apparatus 100 measures the quality factor (Q factor) of the power transmission coil 304 (step F501). The Q factor is acquired by measuring the Q factor in the frequency domain (the first Q factor measurement). If the Q factor measurement is completed, the power transmission apparatus 100 starts transmitting power with a digital ping (hereinafter referred to as a "D-Ping") (step F502). The D-Ping is power for starting the control unit 200 of the power reception apparatus 102 and is power greater than the A-Ping. From this point onward, from when the power transmission apparatus 100 starts transmitting the power with the D-Ping (step F502) to when the power transmission apparatus 100 receives an end power transfer (EPT) packet for requesting the stop of the transmission of power from the power reception apparatus 102 (step F522), the power transmission apparatus 100 continues to transmit power greater than the D-Ping. If the control unit 200 of the power reception apparatus 102 receives the power with the D-Ping and starts, the control unit 200 transmits a signal strength packet, which is data that stores the voltage value of the D-Ping with which the power is received, to the power transmission apparatus 100 (step F503). The power transmission apparatus 100 receives the signal strength packet from the power transmission apparatus 101 having received the D-Ping, thereby recognizing that the object detected in the selection phase is the power reception apparatus. If the power transmission apparatus 100 receives the signal strength packet, a transition is made to the I & C phase.

In the I & C phase, the power reception apparatus 102 transmits data that stores version information regarding the WPC standard with which the power reception apparatus 102 is compliant and an identifier (ID) including device identification information (step F504). The power reception apparatus 102 also transmits to the power transmission apparatus 100 a configuration packet including information indicating the maximum value of power to be supplied from the power reception apparatus 102 to a load (the battery 206) (step F505). The power transmission apparatus 100 receives the ID and the configuration packet, thereby determining whether the version of the power reception apparatus 102 is compatible with the WPC standard with which the power transmission apparatus 100 is compliant. Then, the power transmission apparatus 100 transmits an acknowledgement (ACK). Specifically, if the power transmission apparatus 100 determines that the power reception apparatus 102 is compatible with an expansion protocol of the WPC standard v 1.2 or later (including processing in the negotiation phase described below), the power transmission apparatus 100 responds with ACK (step F506). If the power reception apparatus 101 receives the ACK, a transition is made to the negotiation phase where a negotiation on power to be transmitted and received is made.

In the negotiation phase, the power reception apparatus 102 transmits a foreign object detection (FOD) status packet to the power transmission apparatus 100 (step F507). In the present exemplary embodiment, the FOD status packet is represented as "FOD (Q)". The first foreign object detection processing unit 403 of the power transmission apparatus 100 performs foreign object detection based on the Q factor stored in the received FOD (Q) and the Q factor measured by the Q factor measurement and transmits, to the power reception apparatus 102, ACK indicating that it is determined that there is a high possibility that the foreign object is not present (step F508).

If the power reception apparatus 102 receives the ACK, the power reception apparatus 102 transmits a general request (capabiliy) packet, which is data for inquiring about the capabilities of the power transmission apparatus 100 and is one of general requests defined by the WPC standard (step F535). Hereinafter, the general request (capabiliy) packet will be represented as a "GRQ (CAP) packet". If the power transmission apparatus 100 receives the GRQ (CAP) packet, the power transmission apparatus 100 transmits a capability packet (hereinafter referred to as "CAP") that stores capability information regarding the capabilities with which the power transmission apparatus 100 is compatible (step F536).

The power reception apparatus 102 makes a negotiation on guaranteed power (hereinafter referred to as "GP") that is the maximum value of the power value of power that the power reception apparatus 102 makes a request to receive. The GP indicates the amount of power which can be used by the power reception apparatus 102 and on which agreement is reached in the negotiation with the power transmission apparatus 100. That is, the GP is the maximum value of power that can be used to supply to the load of the power reception apparatus 102 (power consumed by the charging unit 205 and the battery 206). Alternatively, the GP may be power guaranteed to be output from the power reception apparatus to the load (e.g., a circuit for charging and a battery). In this case, for example, the GP indicates the power value of the power guaranteed to be output to the load in the power reception apparatus even if the positional relationship between the power reception apparatus and the power transmission apparatus changes and the power transmission efficiency between the power reception coil and the power transmission coil decreases. For example, in a case where the GP is 5 watts, and even if the positional relationship between the power reception coil and the power transmission coil changes and the power transmission efficiency decreases, the power transmission apparatus transmits power by performing control so that power of 5 watts can be output to the load in the power reception apparatus.

The negotiation is achieved by transmitting to the power transmission apparatus 100 a packet that stores the value of the GP requested by the power reception apparatus among specific request packets defined by the WPC standard (step F509). In the present exemplary embodiment, this data is represented as an "SRQ (GP) packet". The power transmission apparatus 100 responds to the SRQ (GP) packet in view of the power transmission capability of the power transmission apparatus 100. If it is determined that the guaranteed power is accepted, the power transmission apparatus 100 transmits ACK indicating that the request is accepted (step F510). If the negotiation on a plurality of parameters including the GP is completed, the power reception apparatus 102 transmits SRQ (EN) for requesting the end of the negotiation (end negotiation) among the specific requests to the power transmission apparatus (step F511). The power transmission apparatus 100 transmits ACK in response to the SRQ (EN) packet (step F512), and ends the negotiation, and a transition is made to the calibration phase where references for performing foreign object detection based on the power loss technique are created. The "foreign object detection" refers to the process of determining whether an object different from the power reception apparatus (hereinafter referred to as a "foreign object") is present in the power transmittable range of the power transmission apparatus 100 or there is a possibility that the foreign object is present in the power transmittable range of the power transmission apparatus 100.

In the calibration phase, the power reception apparatus 102 notifies the power transmission apparatus 100 of a reception power value R1 when the power reception apparatus 102 receives the power with the D-Ping in the state where power is not supplied to the load (the charging unit 205 and the battery 207). At this time, the power reception apparatus 102 transmits a received power packet (a mode 1) that stores the reception power value R1 (hereinafter referred to as "PR1") to the power transmission apparatus 100. If the power transmission apparatus 100 receives the RP1, the power transmission apparatus 100 transmits ACK to the power reception apparatus 101 (step F514). At this time, the power transmission apparatus 100 measures a transmission power value T1 of the power transmission apparatus 100 and calculates a difference Δ1 between T1 and R1 as power loss. After the power reception apparatus 102 receives the ACK, the power reception apparatus 102 transmits to the power transmission apparatus 100 a control error packet (hereinafter represented as "CE") that requests the power transmission apparatus 100 to increase or decrease a power reception voltage in the state where power is supplied to the load. The CE stores a sign and a numerical value. If the sign of the numerical value stored in the CE is the plus sign, this means that the power reception apparatus 102 requests the power transmission apparatus 100 to increase the power reception voltage. If the sign of the numerical value is the minus sign, this means that the power reception apparatus 102 requests the power transmission apparatus 100 to decrease the power reception voltage. If the numerical value is zero, this means that the power reception apparatus 102 requests the power transmission apparatus 100 to maintain the power reception voltage. The power reception apparatus 102 transmits CE(+) indicating an increase in the power reception voltage to the power transmission apparatus 100 (step F515).

If the power transmission apparatus 100 receives the CE(+), the power transmission apparatus 100 increases the power transmission voltage by changing the setting value of a power transmission circuit (step F516). If the reception power increases in response to the CE(+), the power reception apparatus 102 supplies the received power to the load (the charging unit 205 and the battery 206). The power reception apparatus 102 also transmits RP2 (a received power packet (a mode 2) (hereinafter referred to as "RP2")) to the power transmission apparatus 100 (step F517). The RP2 stores a reception power value R2 in the state where the power reception apparatus 102 supplies power to the load.

If the power transmission apparatus 100 receives the RP2, the power transmission apparatus 100 transmits ACK to the power reception apparatus (step F514). At this time, the power transmission apparatus 100 measures a transmission power value T2 of the power transmission apparatus 100 and calculates a difference Δ2 between T2 and R2 as power loss. The power transmission apparatus 100 performs foreign object detection based on the power loss using as references the power loss Δ1 in a case where power is not supplied to the load and the power consumption of the load is 0, and the power loss Δ2 in a case where power is supplied to the load and the power consumption of the load is not 0. Specifically, based on Δ1 and Δ2, the power transmission apparatus 100 predicts power loss in the state where there is not the foreign object with any reception power value. Based on the predicted value, the calibration processing unit 402 generates a calibration curve. The second foreign object detection processing unit 404 performs the foreign object detection by comparing the relationship between a transmission power value and a reception power value actually received, with the calibration curve. If the power transmission apparatus 100 transmits the ACK in response to the RP2, a transition is made to the power transfer phase.

In the power transfer phase, the power transmission apparatus 100 transmits power with which the power reception apparatus can receive a power of up to 15 watts negotiated in the negotiation phase. The power reception apparatus 102 periodically transmits CE and RP0 (a received power packet (a mode 0) (hereinafter referred to as "RP0")) that stores the current reception power value to the power transmission apparatus 100 (steps F519 and F520). The RP0 may be transmitted at regular intervals, or may be randomly transmitted. If the power transmission apparatus 100 receives the RP0 from the power reception apparatus, the power transmission apparatus 100 predicts power loss with any reception power based on the above Δ1 and Δ2 and performs foreign object detection. If, as a result of the foreign object detection, it is determined that there is a high possibility that the foreign object is not present, the power transmission apparatus 100 transmits ACK to the power reception apparatus (step F521). If it is determined that there is a high possibility that the foreign object is present, the power transmission apparatus 100 transmits NAK to the power reception apparatus.

If the charging of the battery 307 is completed, the power reception apparatus 101 transmits an end power transfer (EPT) packet for requesting the power transmission apparatus 100 to stop the transmission of power (step F522). This is the flow of the control of the power transmission apparatus 100 and the power reception apparatus compliant with the WPC standard v1.2.3.

<Third Foreign Object Detection Process>

Processing performed by the first Q factor measurement unit 400, the calibration processing unit 402, the first foreign object detection processing unit 403, and the second foreign object detection processing unit 404 according to the present exemplary embodiment is as described in the above flow of the processing based on the WPC standard. A foreign object detection method performed by the second Q factor measurement unit 401 and the third foreign object detection processing unit 405 is described.

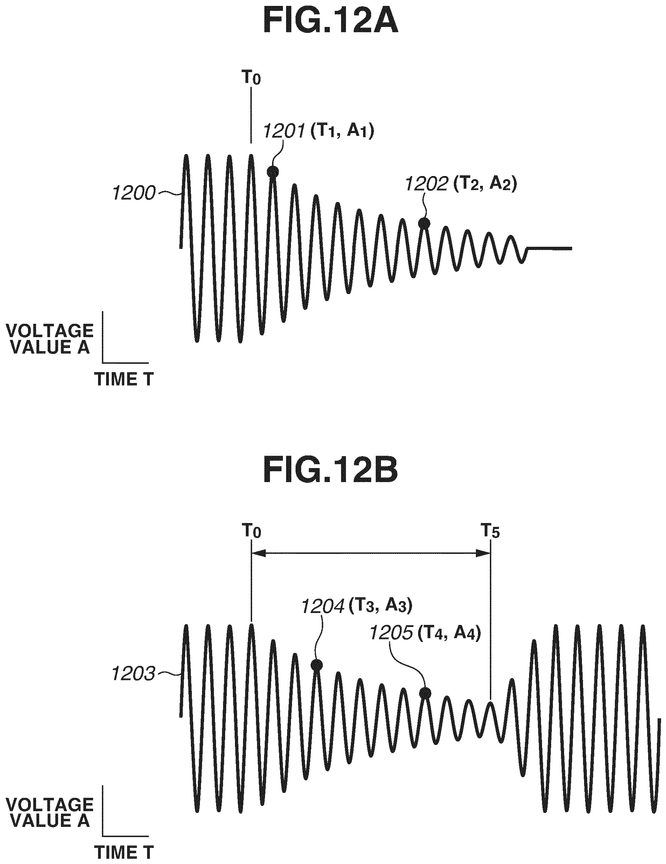

A waveform 1200 in Fig. 12A indicates the lapse of time of the value of a high-frequency voltage applied to the power transmission coil 304 of the power transmission apparatus 100 or an end portion of a resonance capacitor (not illustrated) of the power transmission apparatus 100 (hereinafter referred to simply as "the voltage value of the power transmission coil"). The horizontal axis represents time, and the vertical axis represents the voltage value. At a time T0, the application of the high-frequency voltage (the transmission of power) is stopped. A point 1201 is a single point on the envelope of the high-frequency voltage and indicates the high-frequency voltage at a time T1. (T1, A1) in Fig. 12A indicates that the voltage value at the time T1 is A1. Although the transmission of power is stopped at T0, the present disclosure is not limited to this. For example, at T0, the transmission of power may be limited so that the power to be transmitted is less than or equal to a predetermined value.

Similarly, a point 1202 is a single point on the envelope of the high-frequency voltage and indicates the high-frequency voltage at a time T2. (T2, A2) in Fig. 12A indicates that the voltage value at the time T2 is A2. A Q factor measurement is performed based on a change over time in the voltage value at and after the time T0. Specifically, the Q factor is calculated using (Equation 1) based on the time between the points 1201 and 1202 on the envelope of the voltage value, the voltage value, and a frequency f of the high-frequency voltage (hereinafter referred to as an "operating frequency").
[Math. 1]

$$Q = \pi f \frac{t_2 - t_1}{In\left(\frac{A_1}{A_2}\right)} \ (Equation\ 1)$$

Next, with reference to Fig. 12B, a description is given of processing for the power transmission apparatus 100 to measure the Q factor in the time domain in the present exemplary embodiment. A waveform 1203 indicates the value of a high-frequency voltage applied to the power transmission coil 304, and the frequency of the high-frequency voltage is in the range between 120 kHz and 148.5 kHz, which is used in the WPC standard. Points 1204 and 1205 are parts of the envelope of the voltage value. In a section from a time T0 to a time T5, the power transmission unit 303 of the power transmission apparatus 100 stops the transmission of power or limits the transmission of power so that the power to be transmitted is less than or equal to a predetermined value.

The second Q factor measurement unit 401 of the power transmission apparatus 100 measures the Q factor based on a voltage value A3 (the point 1204) at a time T3, a voltage value A4 (the point 1204) at a time T4, the operating frequency of the high-frequency voltage, and (Equation 1). The power transmission unit 303 of the power transmission apparatus 100 resumes the transmission of power at the time T5. As described above, the second Q factor measurement is achieved by measuring the Q factor based on the lapse of time during a predetermined period when the power transmission apparatus 100 limits the transmission of power, the voltage value, and the operating frequency. Hereinafter, the period when the transmission of power is stopped or the transmission of power is limited so that the power to be transmitted is less than or equal to the predetermined value (the period from the time T0 to the time T5 in the example of Fig. 12B) will be referred to as a "power transmission limitation period".

The power transmission limitation period is determined between the power transmission apparatus 100 and the power reception apparatus 102 before the second Q factor measurement is executed. The shorter the power transmission limitation period is, the shorter the period when the conduction of electricity is limited. Thus, it is possible to transmit power to the power reception apparatus without decreasing the power transmission efficiency. However, for example, the length of the power transmission limitation period that can be achieved differs depending on the capability of the switch 308 or the control unit 301 of the power transmission apparatus 100. Thus, for example, if a length shorter than the length of the minimum period when the power transmission apparatus 100 can limit the transmission of power is set as the power transmission limitation period, there is a possibility that the second Q factor measurement is not appropriately performed. Moreover, depending on the type of the power reception apparatus 102, there can also be a case where the power reception apparatus 102 cannot normally function if the reception power is limited for a certain period or more. The following issue can arise in the power reception apparatus. For example, if the transmission of power is limited for a certain period or more, the power reception apparatus determines that the transmission of power is completed, and ends the power reception process. Or the power reception apparatus cannot perform the process of functioning using power transmitted from the power transmission apparatus 100.

For the above reason, as the power transmission limitation period according to the present exemplary embodiment, a period longer than the minimum length that can be achieved by the power transmission apparatus 100 is set. Moreover, as the power transmission limitation period according to the present exemplary embodiment, a period shorter than the maximum length that can be tolerated by the power reception apparatus 102 is set. The method for setting the power transmission limitation period will be described below.

Based on the second Q factor measured by the second Q factor measurement unit 401, the third foreign object detection processing unit 405 determines whether the foreign object is present in the power transmittable range of the power transmission apparatus 100. For example, the determination method is as described below. In a case where the foreign object is present near the power transmission apparatus 100, the second Q factor is lower than in a case where the foreign object is not present. This is because in a case where the foreign object is present, energy is lost due to the foreign object. If attention is paid to the slope of the attenuation of the voltage value, energy is more lost due to the foreign object when the foreign object is present than when the foreign object is not present. Thus, the slope of a straight line connecting the points 1204 and 1205 in the example of Fig. 12B is steep, and the attenuation rate (the amount of attenuation) of the amplitude of the waveform is high. That the Q factor is low means that the attenuation rate of the waveform (the degree of decrease in the amplitude of the waveform per unit time) is high. Thus, in a case where the second Q factor obtained by the measurement is smaller than a predetermined threshold, the third foreign object detection processing unit 405 can determine that the foreign object is present or there is a high possibility that the foreign object is present.

In the present exemplary embodiment, an example has been described where foreign object detection is performed using the second Q factor. The present disclosure, however, is not limited to this. For example, the determination can also be made using the slope of a straight line connecting the points 1204 and 1205 that is obtained by $(A3 - A4)/(T3 - T4)$. Alternatively, if the times (T3 and T4) when the attenuation state of the voltage value is observed are fixed, the determination may be made using $(A3 - A4)$ indicating the difference between voltage values or the value of the ratio $(A3/A4)$ between voltage values. Yet alternatively, if the voltage value A3 immediately after the transmission of power is stopped is constant, the determination can also be made using the value of the voltage value A4 after the lapse of a predetermined time. Yet alternatively, the determination may be made using the value of a time $(T4 - T3)$ until the voltage value A3 reaches the predetermined voltage value A4.

As described above, the power transmission apparatus 100 measures the voltage of the power transmission coil 304 at at least two or more times within the period when the transmission of power is limited, and acquires the values of the amount of attenuation of the voltage, the attenuation rate, and the Q factor based on the measurement results, and thereby can determine the presence or absence of the foreign object. A TX 402 may be configured to measure the voltage at three or more times.

Also if the vertical axis in each of Figs. 12A and 12B represents the current value of the current flowing through the power transmission coil 304, then similarly to the case of the voltage value, the attenuation state of the current value during the power transmission limitation period changes depending on the presence or absence of the foreign object. Then, in a case where the foreign object is present, the attenuation rate of the waveform is higher than in a case where the foreign object is not present. Thus, also if the above method is applied to a change over time in the current value of the current flowing through the power transmission coil 304, it is possible to determine the presence or absence of the foreign object. That is, it is possible to determine the presence or absence of the foreign object using indices indicating the attenuation state of the current, such as the second Q factor, the slope of the attenuation of the current value, the difference between current values, the ratio between current values, the absolute value of the current value, and the time until the current value reaches a predetermined current value that are obtained based on the measured value of the current, and detect the foreign object. Alternatively, foreign object detection based on both the measured value of the voltage and the measured value of the current may be performed.

<Method for Determining Power Transmission Limitation Period>

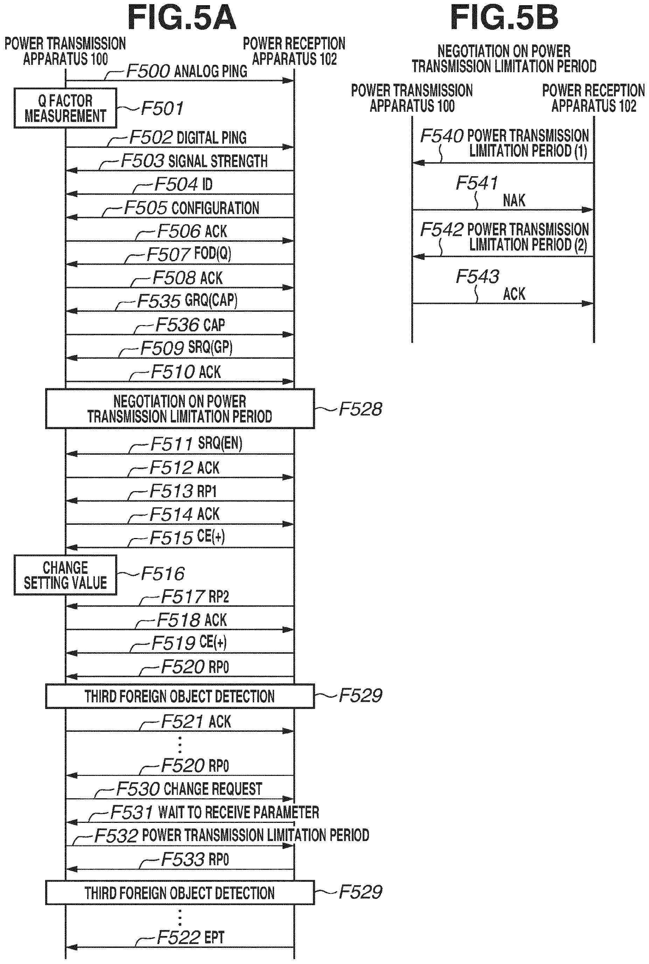

With reference to Figs. 5A and 5B, a description is given of the method for setting the power transmission limitation period set to measure the second Q factor in the present exemplary embodiment. Fig. 5A is a diagram illustrating a sequence in a case where the control process based on the WPC standard and the third foreign object detection process are combined together. Processes similar to those in Fig. 13 are designated by the same signs, and are not described.

In step F528, the power transmission apparatus 100 and the power reception apparatus 102 make a negotiation for determining the power transmission limitation period. Fig. 5B illustrates an example of the negotiation made in step F528. The power reception apparatus 102 transmits a negotiation packet including the length of the power transmission limitation period desired by the power reception apparatus 102 to the power transmission apparatus 100 (step F540). If the length of the power transmission limitation period acquired from the power reception apparatus 102 is accepted, the power transmission apparatus 100 returns ACK. If the length of the power transmission limitation period acquired from the power reception apparatus 102 is not accepted, the power transmission apparatus 100 returns NAK (step F541).

In the present exemplary embodiment, a negotiation packet including an identifier for making a request not to provide a stop time is represented as a "power transmission limitation period (0)". A negotiation packet including an identifier for requesting 100 μ seconds as the length of the power transmission limitation period is represented as a "power transmission limitation period (1)". A negotiation packet including an identifier for requesting 120 μ seconds as the length of the power transmission limitation period is represented as a "power transmission limitation period (2)". A negotiation packet including an identifier for requesting 140 μ seconds as the length of the power transmission limitation period is represented as a "power transmission limitation period (3)". These identifiers are merely examples, and other identifiers may be used. Until ACK is returned from the power transmission apparatus 100, the power reception apparatus 102 repeatedly transmits negotiation packets except for the power transmission limitation period (0) in ascending order of the length of the power transmission limitation period (steps F540 and F542). If ACK is transmitted from the power transmission apparatus 100, the power reception apparatus 102 determines the length of the power transmission limitation period included in a negotiation packet when the power transmission apparatus 100 transmits the ACK, as the length of the power transmission limitation period determined by the negotiation. The power reception apparatus 102 stores the determined length of the power transmission limitation period in the memory 209 and ends the negotiation on the power transmission limitation period (step F543). If ACK is not returned from the power transmission apparatus 100 even though the power reception apparatus 102 transmits all the negotiation packets that can be transmitted except for the power transmission limitation period (0), the power reception apparatus 102 transmits a stop time (0) to the power transmission apparatus 100. The power reception apparatus 102 does not perform the third foreign object detection, and ends the negotiation on the power transmission limitation period.

With reference to Fig. 5B, a description is given of an operation in a case where, for example, the power transmission apparatus 100 can perform the third foreign object detection with the length of the power transmission limitation period greater than or equal to 120 μ seconds. The power reception apparatus 102 transmits the power transmission limitation period (1) to the power transmission apparatus 100 (step F540). The power transmission apparatus 100 determines that the length of the power transmission limitation period acquired from the power reception apparatus 102 is not accepted. Then, the power transmission apparatus 100 returns NAK (step F541).

Next, the power reception apparatus 102 transmits the power transmission limitation period (2) to the power reception apparatus (step F542). The power transmission apparatus 100 determines that a stop time of 120 μ seconds is accepted. Then, the power transmission apparatus 100 returns ACK (step F543). The power reception apparatus 102 and the power transmission apparatus 100 determine 120 μ seconds as the length of the power transmission limitation period and end the negotiation on the power transmission limitation period.

The present exemplary embodiment has illustrated an example of the negotiation in a case where the power transmission apparatus 100 does not transmit the length of the requested power transmission limitation period to the power reception apparatus 102 during the negotiation on the power transmission limitation period. In this case, the power reception apparatus 102 transmits stop times to the power transmission apparatus 100 in ascending order and determines the value of a stop time for which ACK is returned first, as the length of the power transmission limitation period. Consequently, also in a configuration in which the power transmission apparatus 100 does not transmit the length of the power transmission limitation period to the power reception apparatus 102, it is possible to determine the length of the power transmission limitation period by a negotiation. The length of the power transmission limitation period set at this time satisfies the minimum length that can be achieved by the power transmission apparatus 100 and is the shortest length among the lengths of the power transmission limitation period requested by the power reception apparatus 102.

The negotiation on the power transmission limitation period executed in the present exemplary embodiment is merely an example. For example, the power reception apparatus 102 may request the power transmission apparatus 100 to transmit information for determining the length of the power transmission limitation period, and the power transmission apparatus 100 may transmit the length of the power transmission limitation period requested by the power transmission apparatus 100 to the power reception apparatus 102. At this time, the power transmission apparatus 100 may also transmit information indicating the minimum length that can be achieved by the power transmission apparatus 100.

As an example of the negotiation on the power transmission limitation period, the power transmission apparatus transmits CAP including information indicating the length of the power transmission limitation period as a response to GRQ (CAP) to the power reception apparatus. For example, the information indicating the length of the power transmission limitation period is recorded in a "reserved" field defined in the CAP packet. The power transmission apparatus 100 includes the information indicating the length of the power transmission limitation period in the CAP, and thereby can reduce the number of packets required for the negotiation. Further, the power transmission apparatus 100 may have means for determining whether to include the information indicating the length of the power transmission limitation period in the CAP as a response to the GRQ (CAP). If it is determined that the information indicating the length of the power transmission limitation period is not to be included, the power transmission apparatus 100 fills the "reserved" field with zero. The determination of whether to include the information indicating the length of the power transmission limitation period in the CAP is made based on, for example, whether the power reception apparatus is compatible with the third foreign object detection process. The determination of whether the power reception apparatus is compatible with the third foreign object detection process may be made based on, for example, a version compatible with the third foreign object detection process based on version information regarding the power reception apparatus included in a configuration packet. Alternatively, the determination of whether the version of the power reception apparatus is a version compatible with the third foreign object detection process may be made based on, for example, version information included in an identification packet. Yet alternatively, the determination of whether the version of the power reception apparatus is compatible with the third foreign object detection process may be made based on, for example, information indicating whether the power reception apparatus is compatible with the third foreign object detection process that is included in a configuration packet or another packet. If the power reception apparatus is not compatible with the third foreign object detection process, the "reserved" field is filled with zero, whereby it is possible to reduce the risk that the power reception apparatus 102 causes a malfunction in a case where the power reception apparatus 102 is not compatible with the third foreign object detection process.

Referring back to Fig. 5A, according to the reception of the RP0 from the power reception apparatus 102 in step F520, the power transmission apparatus 100 performs the third foreign object detection process (step F529). If the length of the power transmission limitation period is determined in step F528, the power reception apparatus 102 transmits information for requesting the third foreign object detection to the power transmission apparatus 100 by including the information in the RP0. In the present exemplary embodiment, the power reception apparatus 102 transmits the RP0 including the information indicating the length of the power transmission limitation period determined by the negotiation as the information for requesting the third foreign object detection. According to the reception of the RP0 including the length of the power transmission limitation period, the power transmission apparatus 100 performs the third foreign object detection.

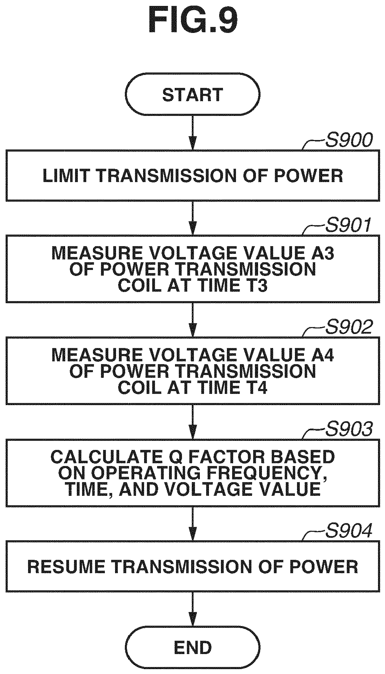

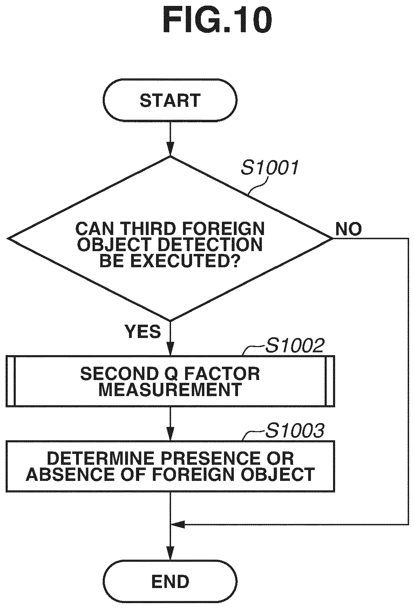

Fig. 10 is a diagram illustrating an example of the flow of the third foreign object detection process performed in step F529. The power transmission apparatus 100 determines whether the third foreign object detection can be executed (step S 1001). If the foreign object detection can be executed, the processing proceeds to step S 1002. If the foreign object detection cannot be executed, the processing ends. Next, the power transmission apparatus 100 performs the second Q factor measurement (step S1002). With reference to Fig. 9, the second Q factor measurement process is described. Fig. 9 is a flowchart of the second Q factor measurement process executed by the power transmission apparatus 100. In Fig. 9, the power transmission control unit 406 stops the transmission of power from the power transmission unit 303 or limits the transmission of power so that the power to be transmitted is smaller than a predetermined value (step S900). Next, the second Q factor measurement unit 401 controls the switch 308 to perform a short circuit process on the power transmission coil 304 and the resonance capacitor 307. Then, at the time T3, the second Q factor measurement unit 401 measures the voltage value A3 of the power transmission coil 304 (step S901). Further, at T4 after the lapse of a certain time, the second Q factor measurement unit 401 measures the voltage value A4 of the power transmission coil 304 (step S902).

Based on the measurement results and (Equation 1), the second Q factor measurement unit 401 calculates the second Q factor from the frequency of the transmission power (the waveform 1203), the time, and the voltage value (step S903). The frequency of the transmission power is a resonance frequency F1 of the power transmission coil 304 and the resonance capacitor 307. If the measurement of the voltage value is completed, the second Q factor measurement unit 401 ends the short circuit process and lifts the limitation on the transmission of power (step S904). The lifting of the limitation means that the transmission power is returned to the amount of power before the transmission of power is limited in step S900.

Referring back to Fig. 10, the power transmission apparatus 100 determines the presence or absence of the foreign object based on the value of the second Q factor and the result of the second foreign object detection method and ends the processing. As a result of the determination of the presence or absence of the foreign object, if it is determined that the foreign object is present or there is a high possibility that the foreign object is present, the power transmission apparatus 100 transmits NAK to the power reception apparatus 102. If it is determined that the foreign object is not present or there is a low possibility that the foreign object is present, the power transmission apparatus 100 transmits ACK to the power reception apparatus 102. In the example of Fig. 5A, it is determined that the foreign object is not present, and in step F521, ACK is transmitted. From this point onward, every time the RP0 including the information for requesting the execution of the third foreign object detection is acquired from the power reception apparatus 102, the power transmission apparatus 100 executes the third foreign object detection by processing similar to the above processing. In the present exemplary embodiment, an example has been described where the RP0 is used as a packet including the information for requesting the execution of the third foreign object detection. Alternatively, a configuration may be employed in which the information is included in a CE packet or another unique packet. Yet alternatively, the information for requesting the execution of the third foreign object detection may be included in RP1 and RP2. In this case, the power transmission apparatus 100 performs the third foreign object detection process in the calibration phase.

<Change in Power Transmission Limitation Period>

The third foreign object detection process is performed by making the negotiation for determining the length of the power transmission limitation period and using the determined length as described above. As described above, the length of the power transmission limitation period is determined based on the capabilities of the power transmission apparatus 100 and the power reception apparatus 102. However, there can be a case where at least either of the states of the power transmission apparatus 100 and the power reception apparatus 102 changes after the length of the power transmission limitation period is determined by the negotiation. For example, in and after step F528, the characteristics of the power transmission apparatus 100 may change due to a change in the GP, a change in the transmission power, a change in the power transmission voltage, a change in the temperature of the power transmission apparatus 100, or a change in the power transmission circuit configuration. There can be a case where, as an influence due to such changes in the characteristics, for example, the ratio between the amount of decrease in the voltage that appears in the waveform 1203 used in the second Q factor measurement and noise changes. If the proportion of the noise increases, the determination result of the foreign object detection may be an incorrect result, or the foreign object detection itself may not be able to be performed. In such a case, it is assumed that the length of the power transmission limitation period is made longer to perform the foreign object detection with the same accuracy as that before the state of the power transmission apparatus 100 changes. Conversely, if, due to a change in the state of the power transmission apparatus 100, the proportion of the noise decreases compared to that before the state changes, it is possible to perform the foreign object detection with the same accuracy even if the stop time is shortened. In such a case, it is assumed that the power transmission efficiency is improved by making the length of the power transmission limitation period shorter.

There can also be a possibility that the negotiation is not made in step F528 due to the combination of the power transmission apparatus 100 and the power reception apparatus 102, abnormal communication, or the settings of the apparatuses. In a case where the negotiation is not made, and even if a packet for requesting the execution of the third foreign object detection process is received from the power reception apparatus 102, the power transmission apparatus 100 cannot execute the third foreign object detection. There can also be a case where the length of the power transmission limitation period that can be tolerated by the power reception apparatus 102 changes due to a change in the state of the power reception apparatus 102, such as a change in the reception power, a change in the power reception voltage, or a change in the temperature of the power reception apparatus 102.

To solve the above issue, the power transmission apparatus 100 and the power reception apparatus 102 according to the present exemplary embodiment perform the process of changing the length of the power transmission limitation period in a case where the state of at least either of the power transmission apparatus and the power reception apparatus changes. With reference to Fig. 5A, the process of changing the length of the power transmission limitation period is described.

In step F520 in Fig. 5A, the power transmission apparatus 100 receives the RP0 including the length of the power transmission limitation period. The length of the power transmission limitation period included in the RP0 is the length determined by the negotiation. A case is described where the power transmission apparatus 100 determines that the length of the power transmission limitation period determined by the negotiation is to be changed due to a change in the state of at least either of the power transmission apparatus 100 and the power reception apparatus 102. As an example, the power transmission apparatus 100 determines that the length of the power transmission limitation period is to be changed to a length greater than or equal to 130 $\mu$ seconds, which is longer than 120 $\mu$ seconds determined by the negotiation. Examples of the case where the power transmission apparatus 100 determines that the length of the power transmission limitation period is to be changed to be longer are the following cases. That is, one of the examples is a case where the temperature of at least either of the power transmission apparatus 100 and the power reception apparatus 102 changes to a temperature higher by a certain amount or more than the temperature at the time when the negotiation is made. Another one of the examples is a case where the temperature of at least either of the power transmission apparatus 100 and the power reception apparatus 102 changes to a temperature higher than a predetermined threshold after the negotiation is made. Another one of the examples is a case where at least either of the value of the power to be transmitted from the power transmission apparatus 100 and the value of the guaranteed power (GP) guaranteed to be output from the power reception apparatus 102 to the load changes from a value determined at the time when the negotiation is made to a value smaller by a certain amount or more. The transmission power and the GP can be changed by the process of performing the negotiation phase again (the renegotiation phase). In the above cases, the power transmission apparatus 100 determines that the length of the power transmission limitation period determined by the negotiation is to be changed to be longer.

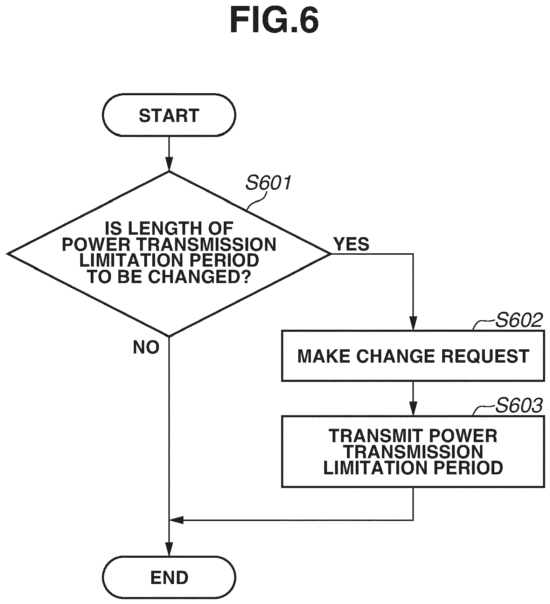

Fig. 6 is the flow of processing regarding a change in the length of the power transmission limitation period. The power transmission apparatus 100 determines whether to change the length of the power transmission limitation period (step S601). If the power transmission apparatus 100 determines that the length of the power transmission limitation period is to be changed, the power transmission apparatus 100 transmits a signal for requesting communication for the change (hereinafter referred to as a "change request") to the power reception apparatus 102 (step S602 and step F530). If the power transmission apparatus 100 determines that the length of the power transmission limitation period is not to be changed, the change process is not performed, and the third foreign object detection process is performed based on the length of the power transmission limitation period acquired from the power reception apparatus 102 (step F529).

If the power reception apparatus 102 receives the change request, the power reception apparatus 102 transmits information indicating that the power reception apparatus 102 waits to receive a parameter from the power transmission apparatus 100 to the power transmission apparatus 100 (step F531). The parameter to be transmitted from the power transmission apparatus 100 is, for example, information indicating the minimum length of the power transmission limitation period when the power transmission apparatus 100 can execute the third foreign object detection process. Using as a trigger a signal transmitted from the power reception apparatus 102 and indicating that the power reception apparatus 102 waits to receive the parameter, the power transmission apparatus 100 transmits a predetermined signal to the power reception apparatus 102 (step S603 and step F532). The signal transmitted from the power reception apparatus 102 in step F531 may be "a signal permitting the power transmission apparatus 100 to transmit the parameter" or "a signal urging the power transmission apparatus 100 to transmit the parameter".

In step F532, the power transmission apparatus 100 transmits a packet including information (a parameter) indicating 130 μ seconds as the length of the power transmission limitation period to the power reception apparatus 102. The power transmission apparatus 100 and the power reception apparatus 102 newly determine 130 μ seconds as the length of the power transmission limitation period. The power reception apparatus 102 transmits RP0 including the information indicating 130 μ seconds as the length of the power transmission limitation period to the power transmission apparatus (step F533). In step S 1001, the power transmission apparatus 100 confirms that the length of the power transmission limitation period included in the RP0 is 130 μ seconds and is greater than or equal to 130 μ seconds as the minimum length with which the third foreign object detection process can be executed. The power transmission apparatus 100 determines that the third foreign object detection can be executed. Then, the third foreign object detection process is performed (steps S 1002 and S 1003 and step F529). As described above, after the power transmission apparatus 100 according to the present exemplary embodiment transmits a packet for requesting communication for changing the length of the power transmission limitation period, the power transmission apparatus 100 transmits a packet including information regarding the length of the power transmission limitation period. Consequently, for example, even in a case where the state of the power transmission apparatus 100 changes during the transmission of power, it is possible to execute the third foreign object detection.

The above example is a case where the length of the power transmission limitation period is changed to be longer than the length determined by the negotiation. Alternatively, the length of the power transmission limitation period can also be changed to be shorter by performing similar processing. Examples of the case where the power transmission apparatus 100 determines that the length of the power transmission limitation period is to be changed to be shorter are the following cases. That is, one of the examples is a case where the temperature of at least either of the power transmission apparatus 100 and the power reception apparatus 102 changes to a temperature lower by a certain amount or more than the temperature at the time when the negotiation is made. Another one of the examples is a case where the temperature of at least either of the power transmission apparatus 100 and the power reception apparatus 102 changes to a temperature lower than a predetermined threshold after the negotiation is made. Another one of the examples is a case where at least either of the value of the power to be transmitted from the power transmission apparatus 100 and the value of the guaranteed power (GP) guaranteed to be output from the power reception apparatus 102 to the load changes from a value determined at the time when the negotiation is made to a value greater by a certain amount or more. In the above cases, the power transmission apparatus 100 determines that the length of the power transmission limitation period determined by the negotiation is to be changed to be shorter.

If the power transmission apparatus 100 determines that the length of the power transmission limitation period is to be changed to be shorter, then in step F532, for example, the power transmission apparatus 100 transmits a packet indicating 110 μ seconds as the length of the power transmission limitation period to the power reception apparatus 102. Consequently, it is possible to make the length of the power transmission limitation period shorter by 10 μ seconds than the length determined by the negotiation and improve the power transmission efficiency compared to a case where the length of the power transmission limitation period is not changed. Every time the power transmission apparatus 100 determines that the length of the power transmission limitation period is to be changed, the above change process for changing the power transmission limitation period may be repeatedly executed. In the present exemplary embodiment, if the power transmission apparatus 100 determines that the length of the power transmission limitation period is to be changed, then in step S802 and step F530, the power transmission apparatus 100 transmits a change request. This process, however, may be omitted. That is, if the power transmission apparatus 200 determines that the length of the power transmission limitation period is to be changed, the power transmission apparatus 100 may transmit a signal including the information indicating the length of the power transmission control period. Alternatively, a configuration may be employed in which the change request includes the information indicating the length of the power transmission control period.

In the present exemplary embodiment, using the reception of a particular packet as a trigger, the parameter transmission process is executed. Alternatively, the parameter transmission process may be executed at another timing. For example, using as a trigger the determination that the third foreign object detection cannot be executed with the length of the power transmission limitation period requested by the power reception apparatus 102, the power transmission apparatus 100 may execute the change process. This is effective, for example, in a case where a transition is made to the power transfer phase in the state where the negotiation is not made.

For example, using as a trigger the lapse of a predetermined time from the last time when the power transmission apparatus 100 transmits a parameter regarding the length of the power transmission limitation period to the power reception apparatus 102, the power transmission apparatus 100 may determine that the change process is to be executed. For example, in the case of a configuration in which the power transmission apparatus 100 includes two or more power transmission circuits and can switch the power transmission circuits according to the transmission power or the power transmission voltage, the power transmission apparatus 100 may execute the parameter transmission process when the power transmission circuits are switched, and determine that the parameter is to be transmitted. Alternatively, for example, if the processing load of the control unit 301 changes by a predetermined value or more, the power transmission apparatus 100 may determine that the parameter is to be transmitted. Yet alternatively, a configuration may be employed in which, by combining at least one or more of the above determination criteria, it is determined whether to perform the change process.

Yet alternatively, for example, in step F530 or F531, the power transmission apparatus 100 may be configured to transmit a packet including an identifier for requesting a renegotiation for changing the length of the power transmission limitation period. After the power reception apparatus 102 receives the packet including the identifier for requesting the renegotiation, the power reception apparatus 102 transmits a renegotiate packet (hereinafter, an "RN packet") to the power transmission apparatus 100. Then, after a transition is made to the renegotiation phase, the power reception apparatus 102 requests the power transmission apparatus 100 to transmit the information indicating the length of the power transmission limitation period. Then, the power transmission apparatus 100 transmits a signal including the information regarding the length of the power transmission limitation period to the power reception apparatus 102.

As described above, in a case where the state of at least either of the power transmission apparatus 100 and the power reception apparatus 102 changes, communication for changing the length of the power transmission limitation period is performed, whereby it is possible to perform an appropriate foreign object detection process according to the change in the state.

In the above example, according to a change in the state of at least either of the power transmission apparatus 100 and the power reception apparatus 102, the power transmission apparatus 100 performs the communication for changing the length of the power transmission limitation period. The present disclosure, however, is not limited to this. For example, according to the states of the power transmission apparatus 100 and the power reception apparatus 102 after the length of the power transmission limitation period is determined, the power transmission apparatus 100 may determine that the communication for changing the length of the power transmission limitation period is to be performed. For example, in a case where the temperature of at least either of the power transmission apparatus 100 and the power reception apparatus 102 is higher than a predetermined threshold, the power transmission apparatus 100 may determine that the communication for changing the length of the power transmission limitation period is to be performed. Alternatively, for example, in a case where at least either of the value of the transmission power and the value of the power guaranteed to be output from the power reception apparatus 102 to the load is smaller than a predetermined threshold, the power transmission apparatus 100 may determine that the communication for changing the length of the power transmission limitation period is to be performed. In these cases, the length of the power transmission limitation period is changed to be longer.

Yet alternatively, for example, in a case where the temperature of at least either of the power transmission apparatus 100 and the power reception apparatus 102 is lower than a predetermined threshold, the power transmission apparatus 100 may determine that the communication for changing the length of the power transmission limitation period is to be performed. Yet alternatively, for example, in a case where at least either of the value of the transmission power and the value of the power guaranteed to be output from the power reception apparatus 102 to the load is greater than a predetermined threshold, the power transmission apparatus 100 may determine that the communication for changing the length of the power transmission limitation period is to be performed. In these cases, the length of the power transmission limitation period is changed to be shorter.

As described above, in a case where the power transmission apparatus 100 determines that the length of the power transmission limitation period is to be changed according to the states of the power transmission apparatus 100 and the power reception apparatus 102 after the length of the power transmission limitation period is determined, for example, the determination may be made at the following timing. That is, in a case where the power transmission apparatus 100 receives a signal (e.g., RP0) including the information indicating the length of the power transmission limitation period, the power transmission apparatus 100 identifies the states of the temperatures of the power transmission apparatus 100 and the power reception apparatus 102 and the magnitude of the transmission power. In view of the identified states, if it is determined that it is necessary to change the length of the power transmission limitation period requested by the power reception apparatus 102, the power transmission apparatus 100 determines that the length of the power transmission limitation period is to be changed.

(Second Exemplary Embodiment)

In the present exemplary embodiment, an example is described where, in a case where the negotiation for determining the length of the power transmission limitation period is not made at the timing of step F528 in Fig. 5A, the negotiation is made in the power transfer phase. The functional configurations of the power transmission apparatus 100 and the power reception apparatus 102 are similar to those in the first exemplary embodiment, and therefore, the descriptions of the functional configurations are omitted using the same signs.

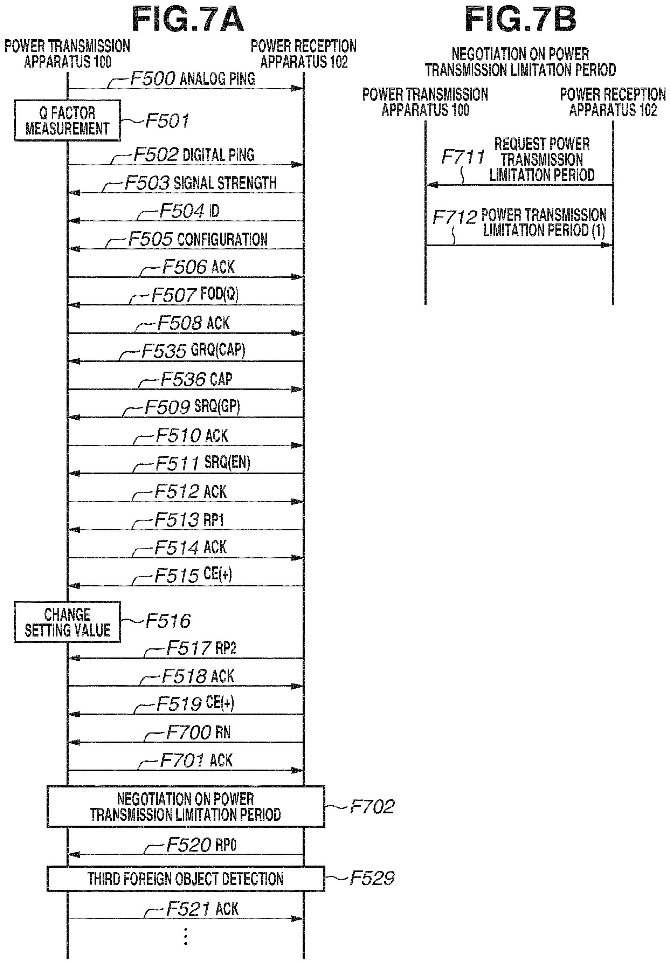

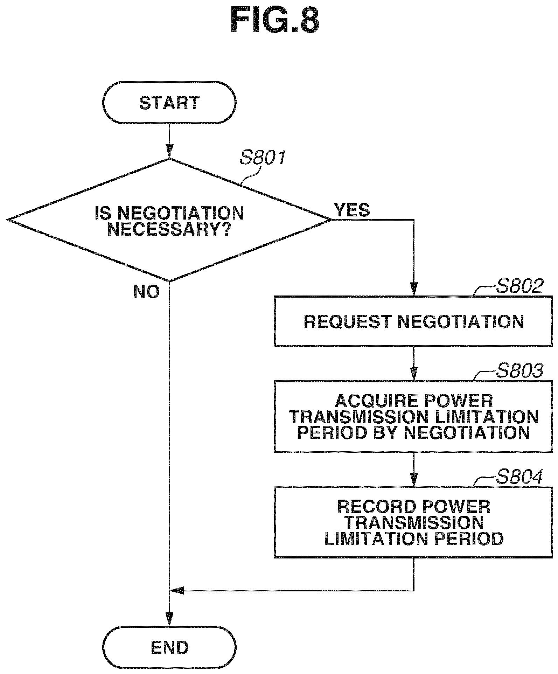

With reference to Figs. 7A, 7B, and 8, processing according to the present exemplary embodiment is described. Fig. 7A is the sequence of the processing of the power transmission apparatus 100 and the power reception apparatus 102 according to the present exemplary embodiment. The example of Fig. 7A indicates that the negotiation in step F528 in Fig. 5A is not made. Fig. 8 is a flowchart illustrating processing performed by the power reception apparatus 102. In Fig. 7A, processes similar to those in Fig. 5A are designated by the same signs. As a factor in not making the negotiation, for example, a case is assumed where a transition is made to the power transfer phase in the state where the initial settings of the power transmission apparatus 100 and the power reception apparatus 102 or communication for the negotiation is not appropriately performed.

In step F700, the power reception apparatus 102 determines whether the negotiation for determining the power transmission limitation period is necessary (step S801). At this time, for example, according to the state where the length of the power transmission limitation period is not stored in the memory 209, the power reception apparatus 102 determines that the negotiation is necessary (YES in step S801). If, on the other hand, it is determined that the negotiation is not necessary, for example, because the third foreign object detection process is not to be performed (NO in step S801), the negotiation is not to be made.

If it is determined that the negotiation is to be made, then in step F700, the power reception apparatus 102 transmits a signal for requesting the negotiation to the power transmission apparatus 100 (step S802). In the present exemplary embodiment, a renegotiate packet (RN) is used as the signal for requesting the negotiation. The RN is a packet for requesting the negotiation phase to be performed again (the renegotiation). Alternatively, a packet other than the RN may be used as the signal for requesting the negotiation. If the power transmission apparatus 100 receives the RN from the power reception apparatus 102 and accepts the negotiation, the power transmission apparatus 100 transmits ACK. If the power transmission apparatus 100 does not accept the negotiation, the power transmission apparatus 100 transmits NAK. In step F701, the power transmission apparatus 100 determines that the request for the negotiation is accepted. Then, the power transmission apparatus 100 transmits ACK.

If the power reception apparatus 102 receives the ACK, a transition is made to the renegotiation phase, and the power transmission apparatus 100 and the power reception apparatus 102 make the negotiation on the power transmission limitation period (step F702). If a packet other than the RN is used as the signal for requesting the negotiation, the following processing may be performed without a transition to the renegotiation phase. In a case where a transition is made to the renegotiation phase, a process such as the determination of the GP value or the notification of the setting value of the power reception apparatus 102 may be executed in addition to the negotiation for determining the power transmission limitation period.

With reference to Fig. 7B, an example of the process of step F702 is described. The power reception apparatus 102 transmits a packet for requesting the length of the power transmission control period to the power transmission apparatus 100 (step F711). According to the reception of the packet for requesting the length of the power transmission limitation period, the power transmission apparatus 100 transmits a signal including information indicating the length of the power transmission limitation period to the power reception apparatus 102 (step F712). As an example, a packet of a power transmission limitation period (1) is transmitted. If the power reception apparatus 102 receives a packet including the information indicating the length of the power transmission limitation period from the power transmission apparatus 100 (step S803), the power reception apparatus 102 stores the received length of the power transmission limitation period in the memory 209 (step S804). Based on the power transmission limitation period (1) transmitted from the power transmission apparatus 100, the power reception apparatus 102 stores 100 $\mu$ seconds in the memory 209. Alternatively, a configuration may be employed in which the power reception apparatus 102 stores not the length of the power transmission limitation period itself transmitted from the power transmission apparatus 100, but a length determined in view of the state of the power reception apparatus 102. Yet alternatively, a configuration may be employed in which in step F702, the processing illustrated in Fig. 5B is performed.

Referring back to Fig. 7A. if the length of the power transmission limitation period is stored in step F702, then in step F520, the power reception apparatus 102 transmits RP0 including the information indicating the length of the power transmission limitation period stored in the memory 209 to the power transmission apparatus 100. From this point onward, the third foreign object detection process is performed similarly to the processing in Fig. 5A.

By the above processing, in a case where the negotiation for determining the length of the power transmission limitation period has not yet been made, the power reception apparatus 102 transmits a signal for requesting the negotiation, whereby it is possible to determine the length of the power transmission limitation period. In the present exemplary embodiment, an example has been described where the negotiation is not made in step F528. However, even if the negotiation is made, the power reception apparatus 102 may transmit a signal for requesting the negotiation, where necessary. A configuration may be employed in which the determination of whether the negotiation is necessary is made by the power reception apparatus 102, using determination criteria similar to those in the first exemplary embodiment.

Alternatively, after the negotiation is made using the method according to the second exemplary embodiment, then similarly to the first exemplary embodiment, the change process for changing the length of the power transmission limitation period may be performed. As described above, the first and second exemplary embodiments can also be carried out in appropriate combination.

(Other Exemplary Embodiments)

Each of the power transmission apparatus and the power reception apparatus may be an image input apparatus such as an imaging apparatus (a camera or a video camera) or a scanner, or may be an image output apparatus such as a printer, a copying machine, or a projector. Alternatively, each of the power transmission apparatus and the power reception apparatus may be a storage device such as a hard disk device or a memory device, or may be an information processing apparatus such as a personal computer (PC) or a smartphone.

The power reception apparatus according to the present disclosure may be an information terminal device. For example, the information terminal device includes a display unit (a display) to which power received from a power reception antenna is supplied and which displays information to a user. The power received from the power reception antenna is stored in a power storage unit (a battery), and the battery supplies the power to the display unit. In this case, the power reception apparatus may include a communication unit that communicates with another apparatus different from the power transmission apparatus. The communication unit may be compatible with a communication standard of NFC communication, the fifth generation mobile communication system (5G), or the like.

Yet alternatively, the power reception apparatus according to the present disclosure may be a vehicle such as an automobile. For example, the automobile as the power reception apparatus may receive power from a charger (the power transmission apparatus) via a power transmission antenna installed in a parking lot. Alternatively, the automobile as the power reception apparatus may receive power from a charger (the power transmission apparatus) via a power transmission antenna embedded in a road. Power received by such an automobile is supplied to a battery. The power in the battery may be supplied to a motor unit (a motor or an electric-powered unit) that drives wheels, or may be used to drive a sensor used in driving assistance or drive a communication unit that communicates with an external apparatus. That is, in this case, the power reception apparatus may include the wheels, the battery, the motor or the sensor driven using received power, and further, a communication unit that communicates with an apparatus other than the power transmission apparatus. Further, the power reception apparatus may include an accommodation unit that accommodates a person. Examples of the sensor include a sensor used to measure the distance between vehicles or the distance from another obstacle. For example, the communication unit may be compatible with the Global Positioning System (Global Positioning Satellite, GPS). The communication unit may also be compatible with a communication standard of the fifth generation mobile communication system (5G), or the like. Alternatively, the vehicle may be a bicycle or an automatic motorcycle.

Yet alternatively, the power reception apparatus according to the present disclosure may be a power tool or a household electrical appliance product. Each of these devices as the power reception apparatus may include a battery and a motor driven by reception power stored in the battery. Each of these devices may also include a notification unit that gives a notification of the remaining amount of the battery. Each of these devices may also include a communication unit that communicates with another apparatus different from the power transmission apparatus. The communication unit may be compatible with a communication standard of NFC, the fifth generation mobile communication system (5G), or the like.

The power transmission apparatus according to the present disclosure may be an in-vehicle charger that transmits power to a mobile information terminal device, such as a smartphone or a tablet compatible with wireless power transmission, inside an automobile. Such an in-vehicle charger may be provided anywhere in the automobile. For example, the in-vehicle charger may be installed in the console of the automobile, or may be installed in the instrument panel (the instrument panel or the dashboard), at a position between seats for passengers, on the ceiling, or on a door. The in-vehicle charger, however, should not be installed at a location where the in-vehicle charger interferes with driving. Although an example has been described where the power transmission apparatus is an in-vehicle charger, such a charger is not limited to a charger placed in a vehicle, and may be installed in transport means such as a train, an aircraft, or a vessel. The charger in this case may also be installed at a position between seats for passengers, on the ceiling, or on a door.

Alternatively, a vehicle such as an automobile including an in-vehicle charger may be the power transmission apparatus. In this case, the power transmission apparatus includes wheels and a battery and supplies power to the power reception apparatus via a power transmission circuit unit and a power transmission antenna using power in the battery.

The present disclosure can also be achieved by the process of supplying a program for achieving one or more functions of the above exemplary embodiments to a system or an apparatus via a network or a storage medium, and of causing one or more processors of a computer of the system or the apparatus to read and execute the program. The present disclosure can also be achieved by a circuit (e.g., an application-specific integrated circuit (ASIC)) for achieving the one or more functions.

At least parts of the flowcharts illustrated in Figs. 6 and 8 to 10 may be achieved by hardware. In a case where parts of the flowcharts are achieved by hardware, for example, a dedicated circuit may be automatically generated on a field-programmable gate array (FPGA) according to a program for achieving steps, using a predetermined compiler. "FPGA" is the abbreviation for field-programmable gate array. Alternatively, a gate array circuit may be formed similarly to the FPGA and achieved as hardware.

The present disclosure is not limited to the above embodiments and various changes and modifications can be made within the spirit and scope of the present disclosure. Therefore, to apprise the public of the scope of the present disclosure, the following claims are made.

This application claims priority from Japanese Patent Applications No. 2021-107321 filed June 29, 2021, which is hereby incorporated by reference herein.

**Claims**

1. A power transmission apparatus comprising:

   a power transmission unit configured to wirelessly transmit power to a power reception apparatus using an antenna;
   a detection unit configured to, based on a measurement result of measuring at least either of a voltage and a current of the antenna at at least two or more times during a power transmission limitation period when the power to be transmitted from the power transmission unit to the power reception apparatus is limited, perform a detection process for detecting an object different from the power reception apparatus;
   a communication unit configured to perform communication for determining the power transmission limitation period with the power reception apparatus; and
   a control unit configured to, according to a state of at least either of the power transmission apparatus and the power reception apparatus after a length of the power transmission limitation period is determined, perform control so that the communication unit transmits a predetermined signal for changing the determined length of the power transmission limitation period to the power reception apparatus.

2. The power transmission apparatus according to claim 1, wherein according to a change in the state of at least either of the power transmission apparatus and the power reception apparatus after the length of the power transmission limitation period is determined, the control unit performs control so that the communication unit transmits the predetermined signal.

3. The power transmission apparatus according to claim 1 or 2, wherein the predetermined signal includes information indicating the length of the power transmission limitation period.

4. The power transmission apparatus according to claim 3, wherein the predetermined signal includes information indicating the minimum length with which the detection unit can achieve the detection process, as the length of the power transmission limitation period.

5. The power transmission apparatus according to any one of claims 1 to 4, wherein the predetermined signal includes information for requesting a negotiation for determining the length of the power transmission limitation period to be made with the power reception apparatus.

6. The power transmission apparatus according to any one of claims 1 to 5, wherein in a case where a temperature of at least either of the power transmission apparatus and the power reception apparatus is a temperature higher than a predetermined threshold, the control unit performs control so that the predetermined signal is transmitted.

7. The power transmission apparatus according to any one of claims 1 to 6, wherein in a case where a temperature of at least either of the power transmission apparatus and the power reception apparatus changes from a first temperature to a second temperature higher by a certain amount than the first temperature during a predetermined period, the control unit performs control so that the predetermined signal is transmitted.

8. The power transmission apparatus according to any one of claims 1 to 7, wherein in a case where a temperature of at least either of the power transmission apparatus and the power reception apparatus is a temperature lower than a predetermined threshold, the control unit performs control so that the predetermined signal is transmitted.

9. The power transmission apparatus according to any one of claims 1 to 8, wherein in a case where a temperature of at least either of the power transmission apparatus and the power reception apparatus changes from a first temperature to a third temperature lower by a certain amount than the first temperature during a predetermined period, the control unit performs control so that the predetermined signal is transmitted.

10. The power transmission apparatus according to any one of claims 1 to 9, wherein in a case where at least either of a value of the power to be transmitted from the power transmission unit and a value of power guaranteed to be output from the power reception apparatus to a load included in the power reception apparatus is a value smaller than a predetermined threshold, the control unit performs control so that the predetermined signal is transmitted.

11. The power transmission apparatus according to any one of claims 1 to 10, wherein in a case where at least either of a value of the power to be transmitted from the power transmission unit and a value of power guaranteed to be output from the power reception apparatus to a load included in the power reception apparatus is a value greater than a predetermined threshold, the control unit performs control so that the predetermined signal is transmitted.

12. The power transmission apparatus according to claim 6, 7, or 10, wherein according to the transmission of the predetermined signal, the length of the power transmission limitation period is changed to be longer than the determined length of the power transmission limitation period.

13. The power transmission apparatus according to claim 8, 9, or 11, wherein according to the transmission of the predetermined signal, the length of the power transmission limitation period is changed to be shorter than the determined length of the power transmission limitation period.

14. The power transmission apparatus according to any one of claims 1 to 13, wherein in a case where the communication unit receives a signal including information indicating a magnitude of power received by the power reception apparatus, the detection unit performs the detection process.

15. A power reception apparatus comprising:

a power reception unit configured to wirelessly receive power from a power transmission apparatus using an antenna;
a determination unit configured to determine a length of a power transmission limitation period when the power to be transmitted from the power transmission apparatus is limited;
a communication unit configured to communicate with the power transmission apparatus; and
a control unit configured to, in a case where the communication unit receives a predetermined signal after the communication unit transmits a signal including information indicating the length of the power transmission limitation period determined by the determination unit to the power transmission apparatus, perform control so that the communication unit performs communication for changing the length of the power transmission limitation period determined by the determination unit.

16. The power reception apparatus according to claim 15, wherein the predetermined signal includes the signal including the information indicating the length of the power transmission limitation period.

17. The power reception apparatus according to claim 16, wherein the length indicated by the predetermined signal is the minimum length that can be achieved by the power transmission apparatus as the length of the power transmission limitation period.

18. The power reception apparatus according to any one of claims 15 to 17, wherein the predetermined signal includes a signal for requesting a negotiation for determining the length of the power transmission limitation period to be made with the power reception apparatus.

19. A power reception apparatus comprising:

    a power reception unit configured to wirelessly receive power from a power transmission apparatus using an antenna;
    a determination unit configured to determine a length of a power transmission limitation period when the power to be transmitted from the power transmission apparatus is limited;
    a communication unit configured to communicate with the power transmission apparatus; and
    a control unit configured to, according to a state of at least either of the power transmission apparatus and the power reception apparatus, perform control so that the communication unit transmits a predetermined signal for changing the length of the power transmission limitation period to the power transmission apparatus.

20. The power reception apparatus according to claim 19, wherein the control unit performs control so that the communication unit transmits a signal for requesting information for determining the length of the power transmission limitation period from the power transmission apparatus to the power transmission apparatus after the communication unit transmits the predetermined signal to the power transmission apparatus.

21. The power reception apparatus according to claim 19 or 20, wherein the predetermined signal is a signal for requesting a negotiation for changing a setting regarding wireless power transmission between the power reception apparatus and the power transmission apparatus.

22. The power reception apparatus according to any one of claims 15 to 21, further comprising:

    a battery configured to store the power received by the power reception unit; and
    a motor configured to be driven using the power stored in the battery.

23. The power reception apparatus according to any one of claims 15 to 22, further comprising:

    a battery configured to store the power received by the power reception unit; and
    a display unit to which the power stored in the battery is supplied.

24. The power reception apparatus according to any one of claims 15 to 23, further comprising:

a battery configured to store the power received by the power reception unit; and
a notification unit configured to give a notification of a remaining amount of the battery.

25. A wireless power transmission method comprising:

    based on a measurement result of measuring at least either of a voltage and a current of an antenna at at least two or more times during a power transmission limitation period when power to be wirelessly transmitted from a power transmission apparatus to a power reception apparatus using the antenna is limited, performing a detection process for detecting an object different from the power reception apparatus;
    based on communication performed between the power transmission apparatus and the power reception apparatus, determining a length of the power transmission limitation period; and
    according to a state of at least either of the power transmission apparatus and the power reception apparatus after the length of the power transmission limitation period is determined in the determination, performing control so that communication for changing the length of the power transmission limitation period determined in the determination is performed.

26. A program for causing a computer to function as the power transmission apparatus according to any one of claims 1 to 14 or the power reception apparatus according to any one of claims 15 to 24.

# FIG.1

# FIG.2

POWER RECEPTION
APPARATUS

# FIG.3

POWER
TRANSMISSION
APPARATUS

100

# FIG.4

| | |
|---|---|
| *400*<br>**FIRST Q FACTOR MEASUREMENT UNIT** | *403*<br>**FIRST FOREIGN OBJECT DETECTION PROCESSING UNIT** |
| *401*<br>**SECOND Q FACTOR MEASUREMENT UNIT** | *404*<br>**SECOND FOREIGN OBJECT DETECTION PROCESSING UNIT** |
| *402*<br>**CALIBRATION PROCESSING UNIT** | *405*<br>**THIRD FOREIGN OBJECT DETECTION PROCESSING UNIT** |
| | *406*<br>**POWER TRANSMISSION CONTROL PROCESSING UNIT** |

# FIG.5A

POWER TRANSMISSION
APPARATUS 100      POWER RECEPTION
APPARATUS 102

F500 ANALOG PING

Q FACTOR
MEASUREMENT   F501

F502 DIGITAL PING

F503 SIGNAL STRENGTH

F504 ID

F505 CONFIGURATION

F506 ACK

F507 FOD(Q)

F508 ACK

F535 GRQ(CAP)

F536 CAP

F509 SRQ(GP)

F510 ACK

NEGOTIATION ON POWER
TRANSMISSION LIMITATION PERIOD   F528

F511 SRQ(EN)

F512 ACK

F513 RP1

F514 ACK

F515 CE(+)

CHANGE
SETTING VALUE   F516

F517 RP2

F518 ACK

F519 CE(+)

F520 RP0

THIRD FOREIGN OBJECT DETECTION   F529

F521 ACK

F520 RP0

F530 CHANGE REQUEST

F531 WAIT TO RECEIVE PARAMETER

F532 POWER TRANSMISSION LIMITATION PERIOD

F533 RP0

THIRD FOREIGN OBJECT DETECTION   F529

F522 EPT

# FIG.5B

NEGOTIATION ON POWER
TRANSMISSION LIMITATION PERIOD

POWER TRANSMISSION
APPARATUS 100      POWER RECEPTION
APPARATUS 102

F540 POWER TRANSMISSION
LIMITATION PERIOD (1)

F541
NAK

F542 POWER TRANSMISSION
LIMITATION PERIOD (2)

F543
ACK

# FIG.6

```
                    ┌──────────────┐
                    │    START     │
                    └──────┬───────┘
                           │
                           ▼
                        ╱─────────╲          S601
                      ╱             ╲
                    ╱   IS LENGTH OF  ╲
                  ╱  POWER TRANSMISSION ╲  YES
                ╱    LIMITATION PERIOD    ╲──────┐
                ╲     TO BE CHANGED?      ╱      │
                  ╲                      ╱       │
                    ╲                  ╱         │
                      ╲   NO         ╱           ▼
                        ╲──┬───────╱       ┌──────────────────────┐  S602
                           │               │  MAKE CHANGE REQUEST │
                           │               └──────────┬───────────┘
                           │                          │
                           │                          ▼          S603
                           │               ┌──────────────────────┐
                           │               │   TRANSMIT POWER      │
                           │               │    TRANSMISSION       │
                           │               │  LIMITATION PERIOD    │
                           │               └──────────┬───────────┘
                           │                          │
                           │◄─────────────────────────┘
                           ▼
                    ┌──────────────┐
                    │     END      │
                    └──────────────┘
```

# FIG.7A

POWER TRANSMISSION
APPARATUS 100

POWER RECEPTION
APPARATUS 102

F500 ANALOG PING

Q FACTOR
MEASUREMENT — F501

F502 DIGITAL PING

F503 SIGNAL STRENGTH

F504 ID

F505 CONFIGURATION

F506 ACK

F507 FOD(Q)

F508 ACK

F535 GRQ(CAP)

F536 CAP

F509 SRQ(GP)

F510 ACK

F511 SRQ(EN)

F512 ACK

F513 RP1

F514 ACK

F515 CE(+)

CHANGE
SETTING VALUE — F516

F517 RP2

F518 ACK

F519 CE(+)

F700 RN

F701 ACK

| NEGOTIATION ON POWER TRANSMISSION LIMITATION PERIOD | — F702 |

F520 RP0

| THIRD FOREIGN OBJECT DETECTION | — F529 |

F521 ACK

⋮

# FIG.7B

NEGOTIATION ON POWER
TRANSMISSION LIMITATION PERIOD

POWER TRANSMISSION
APPARATUS 100

POWER RECEPTION
APPARATUS 102

F711 REQUEST POWER
TRANSMISSION
LIMITATION PERIOD

F712 POWER TRANSMISSION
LIMITATION PERIOD (1)

# FIG.8

START

S801

IS NEGOTIATION NECESSARY?

YES

NO

S802

REQUEST NEGOTIATION

S803

ACQUIRE POWER TRANSMISSION LIMITATION PERIOD BY NEGOTIATION

S804

RECORD POWER TRANSMISSION LIMITATION PERIOD

END

# FIG.9

START

S900
LIMIT TRANSMISSION OF POWER

S901
MEASURE VOLTAGE VALUE A3
OF POWER TRANSMISSION
COIL AT TIME T3

S902
MEASURE VOLTAGE VALUE A4
OF POWER TRANSMISSION
COIL AT TIME T4

S903
CALCULATE Q FACTOR BASED
ON OPERATING FREQUENCY,
TIME, AND VOLTAGE VALUE

S904
RESUME TRANSMISSION OF POWER

END

# FIG.10

START

S1001

CAN THIRD FOREIGN
OBJECT DETECTION
BE EXECUTED?

NO

YES

SECOND Q FACTOR
MEASUREMENT

S1002

DETERMINE PRESENCE OR
ABSENCE OF FOREIGN OBJECT

S1003

END

# FIG.11

# FIG.12A

1200

1201 (T$_1$, A$_1$)

1202 (T$_2$, A$_2$)

T$_0$

VOLTAGE
VALUE A

TIME T

# FIG.12B

1203

1204 (T$_3$, A$_3$)

1205 (T$_4$, A$_4$)

T$_0$

T$_5$

VOLTAGE
VALUE A

TIME T

# FIG.13

POWER TRANSMISSION
APPARATUS 100

POWER RECEPTION
APPARATUS 102

F500 ANALOG PING →

F501 — Q FACTOR
MEASUREMENT

F502 DIGITAL PING →

← F503 SIGNAL STRENGTH

← F504 ID

← F505 CONFIGURATION

F506 ACK →

← F507 FOD(Q)

F508 ACK →

← F535 GRQ(CAP)

F536 CAP →

← F509 SRQ(GP)

F510 ACK →

← F511 SRQ(EN)

F512 ACK →

← F513 RP1

F514 ACK →

← F515 CE(+)

F516 — CHANGE
SETTING VALUE

← F517 RP2

F518 ACK →

← F519 CE(+)

← F520 RP0

F521 ACK →

← F522 EPT

## INTERNATIONAL SEARCH REPORT

| | International application No. |
|---|---|
| | **PCT/JP2022/022912** |

### A. CLASSIFICATION OF SUBJECT MATTER

*H02J 50/60*(2016.01)i; *H02J 7/00*(2006.01)i; *H02J 50/12*(2016.01)i; *H02J 50/80*(2016.01)i
FI: H02J50/60; H02J7/00 301D; H02J50/12; H02J50/80

According to International Patent Classification (IPC) or to both national classification and IPC

### B. FIELDS SEARCHED

Minimum documentation searched (classification system followed by classification symbols)

H02J50/60; H02J7/00; H02J50/12; H02J50/80

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-022981 A (CANON KK) 18 February 2021 (2021-02-18) paragraphs [0013], [0019]-[0045], [0054]-[0063], [0074], fig. 1-9, 13-15 | 15-24, 26 |
| Y | | 1-9, 12-13, 25-26 |
| A | | 10-11, 14 |
| Y | JP 2016-096724 A (FU DA TONG TECHNOLOGY CO., LTD.) 26 May 2016 (2016-05-26) paragraphs [0019]-[0020], [0026]-[0029] | 1-9, 12-13, 25-26 |
| Y | JP 2017-511117 A (TEXAS INSTRUMENTS JAPAN LIMITED) 13 April 2017 (2017-04-13) paragraphs [0027], [0030], [0037] | 1-9, 12-13, 25-26 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 August 2022** | **23 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/022912**

| Patent document cited in search report | | | Publication date (day/month/year) | Patent family member(s) | | | Publication date (day/month/year) |
|---|---|---|---|---|---|---|---|
| JP | 2021-022981 | A | 18 February 2021 | (Family: none) | | | |
| JP | 2016-096724 | A | 26 May 2016 | US<br>paragraphs [0032]-[0034],<br>[0041]-[0045]<br>CN | 1-9,12-13,25-26<br><br><br>105449875 | A1<br><br><br>A | |
| JP | 2017-511117 | A | 13 April 2017 | US<br>paragraphs [0030], [0033],<br>[0040]<br>CN | 2015/0285926<br><br><br>106134037 | A1<br><br><br>A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017070074 A
- JP 2018512036 A
- JP 2021107321 A